# EUROPEAN PATENT APPLICATION

(11) **EP 4 738 084 A1**
(43) Date of publication of application: **06.05.2026**
(21) Application number: 25730892.4
(22) Date of filing: 11.06.2025
(51) Int. Cl.: G06F 3/0484, G06F 3/0481, G06F 1/16, G06F 3/00

(54) **ELECTRONIC DEVICE AND METHOD FOR DISPLAYING USER INTERFACE ON FLEXIBLE DISPLAY**

(30) Priority: 14.09.2024 KR 20240126264; 15.10.2024 KR 20240140763
(71) Applicant: SAMSUNG ELECTRONICS CO., LTD., Yeongtong-gu Suwon-si, Gyeonggi-do 16677 (KR)
(72) Inventor: KIM, Sangheon, Suwon-si, Gyeonggi-do 16677 (KR); KIM, Koeun, Suwon-si, Gyeonggi-do 16677 (KR); KIM, Jeongseob, Suwon-si, Gyeonggi-do 16677 (KR); MIN, Byungwoo, Suwon-si, Gyeonggi-do 16677 (KR); EOM, Junbong, Suwon-si, Gyeonggi-do 16677 (KR)
(74) Representative: HGF
(86) International application number: PCT/KR2025/007984
(87) International publication number: WO 2026/059037

(57) **Abstract**

According to an embodiment, a method performed by an electronic device includes, while an application for obtaining an image related to an external environment is executed, based on a state of the electronic device, determining at least one of a first display area, a second display area, and a third display area as a display area to display a user interface for the application, determining one of a first camera and a second camera as a camera to display a preview image to be displayed in the user interface, determining, based on the determined display area and an orientation of the electronic device identified via one or more sensors, a layout of the user interface for the application, and displaying, based on the determined layout, the user interface for the application, including a preview image obtained via the determined camera, in the determined display area.

## Description

### [Technical Field]

The following descriptions relate to an electronic device and a method for displaying a user interface in a flexible display.

### [Background Art]

A shape and/or a size of electronic devices are diversifying. To enhance mobility, electronic devices which may have a reduced size and/or a reduced volume are being designed. Examples of the electronic devices may include a display for visualizing information. As the number of functions supported by an electronic device increases, a size of the display may increase to visualize more information to a user and/or to support execution of the functions. For example, the electronic device may be designed so that the size of the display is maintained or increased while decreasing the size and/or the volume of the electronic device.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, an electronic device may comprise a first housing part, a second housing part rotatably coupled with the first housing part, a third housing part rotatably coupled with the second housing part, a flexible display including a first display area corresponding to a first surface of the first housing part, a second display area corresponding to a first surface of the second housing part, and a third display area corresponding to a first surface of the third housing part, a first camera disposed on the first surface of the first housing part, a second camera disposed on a second surface opposite to the first surface of the first housing part, one or more sensors, memory, including one or more storage mediums, storing instructions, and at least one processor comprising processing circuitry. The instructions, when executed by the at least one processor individually and/or collectively, may cause the electronic device to, while an application for obtaining an image related to an external environment is executed, based on a state of the electronic device according to a position relationship between the first housing part, the second housing part, and the third housing part, determine at least one of the first display area, the second display area, and the third display area as a display area to display a user interface for the application, determine one of the first camera and the second camera as a camera to display a preview image to be displayed in the user interface, determine, based on the determined display area and an orientation of the electronic device identified via the one or more sensors, a layout of the user interface for the application, and display, based on the determined layout, the user interface for the application, including a preview image obtained via the determined camera, in the determined display area.

According to an embodiment, an electronic device may comprise a first housing part, a second housing part rotatably coupled with the first housing part, a third housing part rotatably coupled with the second housing part, a flexible display including a first display area corresponding to a first surface of the first housing part, a second display area corresponding to a first surface of the second housing part, and a third display area corresponding to a first surface of the third housing part, a first camera disposed on the first surface of the first housing part, a second camera disposed on a second surface opposite to the first surface of the first housing part, and one or more sensors. A method performed by the electronic device may comprise, while an application for obtaining an image related to an external environment is executed, based on a state of the electronic device according to a position relationship between the first housing part, the second housing part, and the third housing part, determining at least one of the first display area, the second display area, and the third display area as a display area to display a user interface for the application, determining one of the first camera and the second camera as a camera to display a preview image to be displayed in the user interface, determining, based on the determined display area and an orientation of the electronic device identified via the one or more sensors, a layout of the user interface for the application, and displaying, based on the determined layout, the user interface for the application, including a preview image obtained via the determined camera, in the determined display area.

According to an embodiment, a non-transitory computer readable storage medium may store one or more programs. The one or more programs may comprise instructions, when executed by at least one processor of an electronic device comprising a first housing part, a second housing part rotatably coupled with the first housing part, a third housing part rotatably coupled with the second housing part, a flexible display including a first display area corresponding to a first surface of the first housing part, a second display area corresponding to a first surface of the second housing part, and a third display area corresponding to a first surface of the third housing part, a first camera disposed on the first surface of the first housing part, a second camera disposed on a second surface opposite to the first surface of the first housing part, and one or more sensors, to cause the electronic device to, while an application for obtaining an image related to an external environment is executed using one of the first camera and the second camera, based on a state of the electronic device according to a position relationship of the first housing part, the second housing part, and the third housing part, determine at least one of the first display area, the second display area, and the third display area as a display area to display a user interface for the application, determine one of the first camera and the second camera as a camera to display a preview image to be displayed in the user interface, determine, based on the determined display area and an orientation of the electronic device identified via the one or more sensors, a layout of the user interface for the application, and display, based on the determined layout, the user interface for the application, including a preview image obtained via the determined camera, in the determined display area.

### [Description of the Drawings]

FIG. 1A illustrates an example of a first state of an electronic device.
FIG. 1B illustrates an example of a second state of an electronic device.
FIG. 1C illustrates an example of a third state of an electronic device.
FIG. 2A is a plan view of an electronic device from which a flexible display is removed.
FIG. 2B is a rear view of an electronic device from which a rear cover and a display are removed.
FIG. 3A illustrates an example of a simplified block diagram of an electronic device according to an embodiment.
FIG. 3B illustrates an example of an electronic device according to an embodiment.
FIG. 4 illustrates an example of states of an electronic device according to an embodiment.
FIG. 5 illustrates an example of orientations of an electronic device according to an embodiment.
FIG. 6 illustrates a flowchart of an operation of an electronic device according to an embodiment.
FIG. 7 illustrates an example of a user interface according to a state change of an electronic device in a first orientation according to an embodiment.
FIG. 8 illustrates an example of a user interface according to a state change of an electronic device in a first orientation according to an embodiment.
FIG. 9 illustrates an example of a user interface according to a state change of an electronic device in a second orientation according to an embodiment.
FIG. 10 illustrates an example of a user interface according to a state change of an electronic device in a second orientation according to an embodiment.
FIG. 11A illustrates an example of a user interface according to a state change of an electronic device in a third orientation according to an embodiment.
FIG. 11B illustrates an example of a user interface according to a state change of an electronic device in a fourth orientation according to an embodiment.
FIG. 12A illustrates an example of a screen for guiding a transition from a first orientation to a self-photography mode according to an embodiment.
FIG. 12B illustrates an example of a screen for guiding a transition from a third orientation to a self-photography mode according to an embodiment.
FIG. 13A illustrates an example of an operation of an electronic device according to an embodiment.
FIG. 13B illustrates an example of an operation of an electronic device according to an embodiment.
FIG. 14A illustrates an example of an operation of an electronic device according to an embodiment.
FIG. 14B illustrates an example of an operation of an electronic device according to an embodiment.
FIG. 14C illustrates an example of an operation of an electronic device according to an embodiment.
FIG. 15 illustrates an example of an operation of an electronic device according to an embodiment.
FIG. 16A illustrates an example of an operation of an electronic device according to an embodiment.
FIG. 16B illustrates an example of an operation of an electronic device according to an embodiment.
FIG. 17 is a block diagram of an electronic device in a network environment according to an embodiment.

### [Mode for Invention]

Hereinafter, an embodiment of the present disclosure will be described in detail with reference to a drawing so that those having ordinal knowledge in the art to which the present disclosure belongs may easily implement the present disclosure. However, the present disclosure may be implemented in several different forms and is not limited to an embodiment described herein. With respect to the description of the drawing, the same or similar reference numerals may be used for the same or a similar component. In addition, in the drawing and the related description, the description of a well-known function and configuration may be omitted for clarity and brevity.

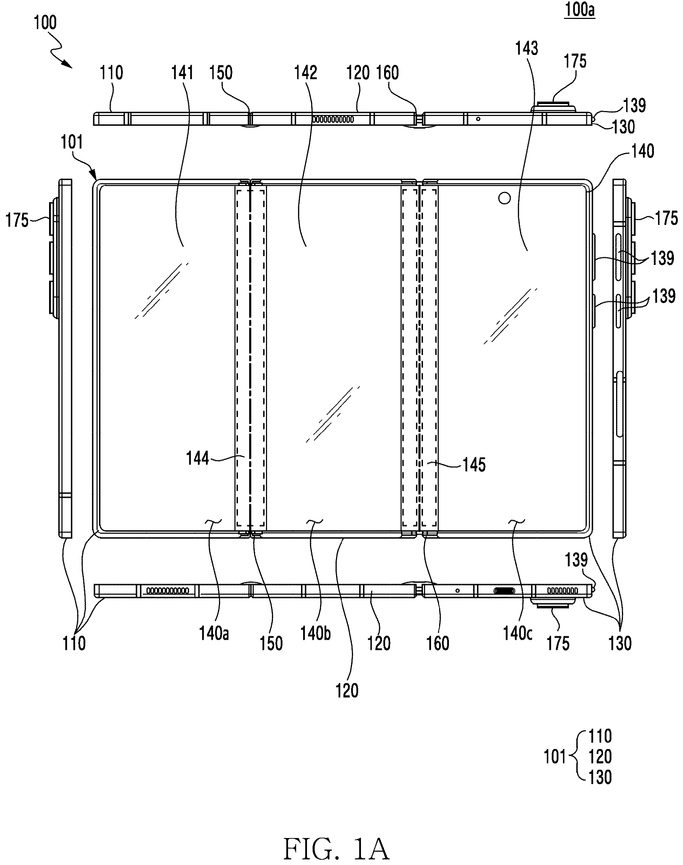

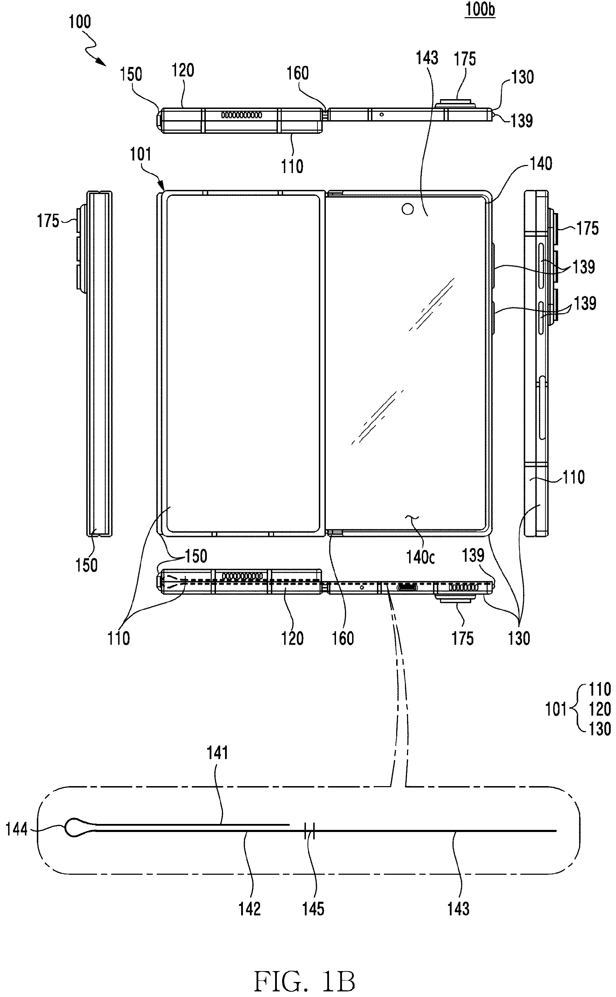

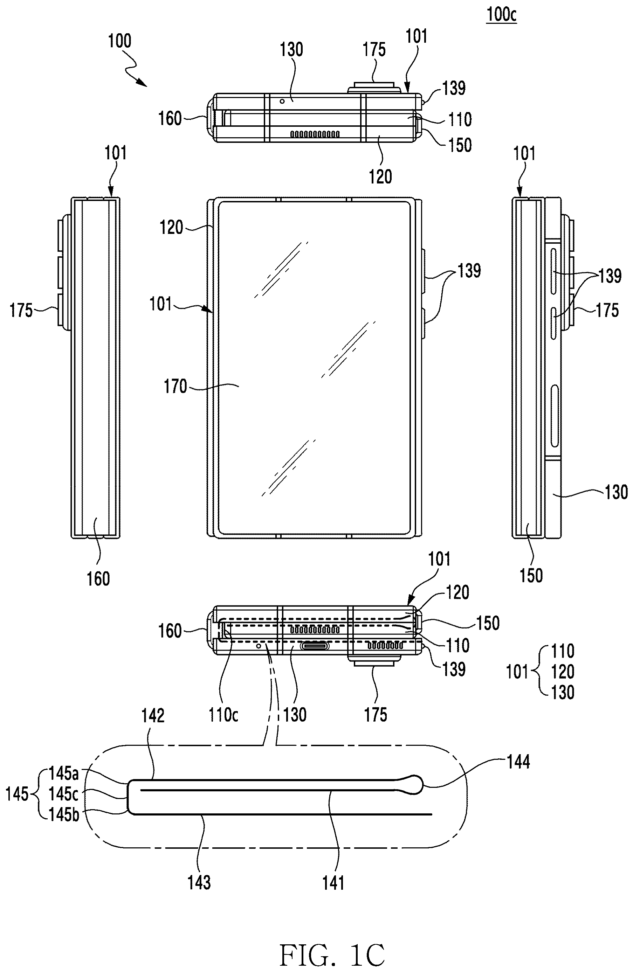

FIG. 1A illustrates an example of a first state of an electronic device. FIG. 1B illustrates an example of a second state of an electronic device. FIG. 1C illustrates an example of a third state of an electronic device.

Referring to FIGS. 1A, 1B, and 1C, an electronic device 100 may include a housing structure 101, a flexible display 140, a first hinge structure 150, a second hinge structure 160, and a display 170. The first housing structure 101 may include a first housing part 110, a second housing part 120, and a third housing part 130.

The first housing part 110 may be rotatably coupled to the second housing part 120 by the first hinge structure 150. The second housing part 120 and the first housing part 110 may be rotated relative to the first hinge structure 150. While the first housing part 110 is rotated relative to the first hinge structure 150, the second housing part 120 may be rotated relative to the first hinge structure 150. For example, when the second housing part 120 and the first housing part 110 are rotated relative to the first hinge structure 150, an angular displacement of the second housing part 120 may be substantially the same as an angular displacement of the first housing part 110.

The third housing part 130 may be rotatably coupled to the second housing part 120 by the second hinge structure 160. The second housing part 120 and the third housing part 130 may be rotated relative to the second hinge structure 160. While the second housing part 120 is rotated relative to the second hinge structure 160, the third housing part 130 may be rotated relative to the second hinge structure 160. For example, when the second housing part 120 and the third housing part 130 rotate relative to the second hinge structure 160, the angular displacement (or an angular change) of the second housing part 120 may be substantially the same as an angular displacement of the third housing part 130.

The first hinge structure 150 and the second hinge structure 160 may change a state of the electronic device. In other words, a rotation of at least one of the first housing part 110 and/or second housing part 120 about the first hinge structure 150, and the second housing part 120 and/or third housing part 130 around the second hinge structure 160, provides a change in angle (or angular displacement) between the respective housing parts about a hinge structure to change a state of the electronic device (e.g. according to a position, or positional, relationship between the housing parts). The first hinge structure 150 and the second hinge structure 160 (e.g. according to an angle or displacement of the housing parts about the first hinge structure 150 and second hinge structure) may provide (or may enable) a first state 100a of the electronic device 100 (or the first state 100a of the housing structure 101). The first state 100a of the electronic device 100 (or the first state 100a of the housing structure 101) may be described as an unfolded state (or an unfolding state, or an open state) of the electronic device 100 (or the housing structure 101). In the first state 100a, a front surface of the first housing part 110, a front surface of the second housing part 120, and a front surface of the third housing part 130 may define a front surface of the electronic device 100. In the first state 100a, the front surface of the first housing part 110, the front surface of the second housing part 120, and the front surface of the third housing part 130 may face the same direction. In the first state 100a, the electronic device 100 may provide a large display area of the flexible display 140 to a user.

The first hinge structure 150 and the second hinge structure 160 may provide a second state 100b of the electronic device 100. The second state 100b of the electronic device 100 may be described as a state in which the electronic device 100 is partially folded and partially unfolded (or a single folding state or a half-folding state). For example, in the second state 100b, the front surface of the second housing part 120 and the front surface of the third housing part 130 may face the same direction, and the front surface of the first housing part 110 and the front surface of the second housing part 120 may face opposite directions. For example, the first housing part 110 and/or second housing part 120 may be rotated around the first hinge structure 150 so that in the second state 100b, the front surface of the second housing part 120 and the front surface of the first housing part 110 may face each other. For example, in the second state 100b, the first housing part 110 and the second housing part 120 may be folded (e.g. about the first hinge structure 150), and the second housing part 120 and the third housing part 130 may be unfolded (e.g. about the second hinge structure 160). In the second state 100b, the electronic device 100 may provide visual information via a portion (e.g., a third display area 140c of the flexible display 140 in the third housing 130) of the flexible display 140.

The electronic device 100 may change from the first state 100a to a third state 100c via the second state 100b. The electronic device 100 may change from the first state 100a, which is the unfolded state, to the second state 100b, which is the partially unfolded state. For example, the electronic device 100 may change from the second state 100b to the third state 100c, by rotation of the third housing part 130 (and/or the folded first and second housing parts) about the second hinge structure 160. For example, the electronic device 100 may change from the first state 100a in which the first housing part 110, the second housing part 120, and the third housing part 130 face the same direction to the second state 100b in which the front surface of the first housing part 110 faces the front surface of the second housing part 120. The electronic device 100 may change from the second state 100b, which is the partially unfolded state, to the third state 100c, which is a folded state. For example, when changing from the second state 100b to the third state 100c, the first housing part 110 and the second housing part 120 that are folded may be disposed on the third housing part 130.

The first hinge structure 150 and the second hinge structure 160 may provide the third state 100c of the electronic device 100 (or the third state 100c of the housing structure 101). The third state 100c of the electronic device 100 (or the third state 100c of the housing structure 101) may be described as the folded state (or a folding state or a multi-folding state) of the electronic device 100 (or the housing structure 101). In the third state 100c, the front surface of the first housing part 110 and the front surface of the second housing part 120 may face opposite directions, and the front surface of the second housing part 120 and the front surface of the third housing part 130 may face opposite directions. In the third state 100c, the front surface of the first housing part 110 and the front surface of the third housing part 130 may face the same direction. For example, in the third state 100c, the front surface of the second housing part 120 may face the front surface of the first housing part 110, and the front surface of the third housing part 130 may face a rear surface of the first housing part 110. A rear surface of the second housing part 120 may be exposed to the outside in the third state 100c. The display 170 (e.g. a second display, a rear display, or cover display) may be disposed on the rear surface of the second housing part 120. A rear surface of the third housing part 130 may be exposed to the outside in the third state 100c. A rear camera 175 may be disposed on the rear surface of the third housing part 130. In the third state 100c, the electronic device 100 may be folded to improve portability and may provide visual information via the display 170 disposed on the rear surface of the second housing 120.

The electronic device 100 may further include a key button 139. The key button 139 may be exposed from a structure (e.g., an opening) formed on a side surface of the third housing part 130 and may partially protrude to the outside of the electronic device 100. The key button 139 may provide a physical input to processing circuitry inside the electronic device 100 by pressure transmitted from the outside. The key button 139 may not be included in the electronic device 100 and may be implemented in another form, such as a soft key displayed on the flexible display 140 or the display 170.

The key button 139 may be disposed on the side surface of the third housing part 130 to be exposed to the outside in the third state 100c. The key button 139 may be disposed in a direction in which the side surface of the third housing 130 faces, by being disposed on the side surface of the third housing part 130. Even when changing from the third state 100c to the first state 100a by a user looking at the display 170, a position of the key button 139 disposed on the side surface of the third housing 130 may not be moved. For example, referring to FIG. 1A, in the first state 100a, when the flexible display 140 is viewed from above, the key button 139 may be disposed on a right side. Referring to FIG. 1B, in the third state 100c, when the display 170 is viewed from above, the key button 139 may be disposed on the right side.

The flexible display 140 may at least partially define an exterior of the electronic device 100. The flexible display 140 may be partially disposed in the housing structure 101. The flexible display 140 may define the front surface of the electronic device 100. The flexible display 140 may include a first unbendable portion 141, a second unbendable portion 142, a third unbendable portion 143, a first bendable portion 144, and a second bendable portion 145. The first unbendable portion 141 of the flexible display 140 may be disposed on the front surface of the first housing part 110. The second unbendable portion 142 of the flexible display 140 may be disposed on the front surface of the second housing part 120. The third unbendable portion 143 of the flexible display 140 may be disposed on the front surface of the third housing part 130. The first bendable portion 144 of the flexible display 140 may be disposed between the first unbendable portion 141 and the third unbendable portion 143 of the flexible display 140. For example, the first bendable portion 144 of the flexible display 140 may be disposed on (e.g. disposed, or arranged, to correspond to) the first hinge structure 150 connecting the first housing part 110 and the second housing part 120. The second bendable portion 145 of the flexible display 140 may be disposed between the second unbendable portion 142 and the third unbendable portion 143 of the flexible display 140. For example, the second bendable portion 145 of the flexible display 140 may be disposed on (e.g. disposed, or arranged, to correspond to) the second hinge structure 160 connecting the second housing part 120 and the third housing part 130.

The first hinge structure 150 and the second hinge structure 160 may face substantially the same direction as the first unbendable portion 141 of the flexible display 140, the second unbendable portion 142 of the flexible display 140, and the third unbendable portion 143 of the flexible display 140. In the first state 100a, the first bendable portion 144 and the second bendable portion 145 may be disposed on substantially the same horizontal plane as the first unbendable portion 141, the second unbendable portion 142, and the third unbendable portion 143.

The first hinge structure 150 and the second hinge structure 160 may provide the second state 100b of the electronic device 100. In the second state 100b, the first unbendable portion 141 of the flexible display 140 may face the second unbendable portion 142 of the flexible display 140, and the third unbendable portion 143 of the flexible display 140 may face the same direction as the second unbendable portion 142 of the flexible display 140. For example, the second unbendable portion 142 and the third unbendable portion 143 may be disposed on (e.g. arranged on) substantially the same horizontal plane.

In the second state 100b, as the first bendable portion 144 of the flexible display 140 is bent by the first hinge structure 150, the first bendable portion 144 of the flexible display 140 may be folded so that the first unbendable portion 141 of the flexible display 140 and the second unbendable portion 142 of the flexible display 140 face different directions.

In the second state 100b, as the second bendable portion 145 of the flexible display 140 is maintained in the unfolded state by the second hinge structure 160, the second bendable portion 145 of the flexible display 140 may be unfolded so that the second unbendable portion 142 of the flexible display 140 and the third unbendable portion 143 of the flexible display 140 face the same direction.

The first hinge structure 150 and the second hinge structure 160 may provide the third state 100c of the electronic device 100. In the third state 100c, the second unbendable portion 142 of the flexible display 140 may face the first unbendable portion 141 of the flexible display 140, and the third unbendable portion 143 of the flexible display 140 may face the rear surface of the first housing part 110.

In the third state 100c, as the first bendable portion 144 of the flexible display 140 is bent by the first hinge structure 150, the first bendable portion 144 of the flexible display 140 may be folded so that the first unbendable portion 141 of the flexible display 140 and the second unbendable portion 142 of the flexible display 140 face different directions.

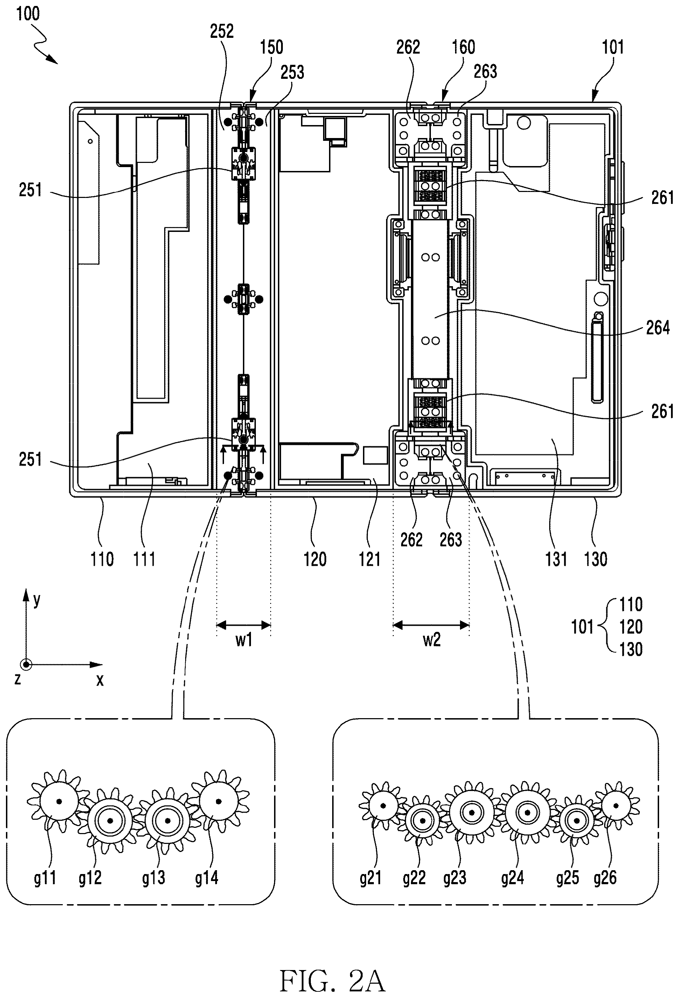

In the third state 100c, as the second bendable portion 145 of the flexible display 140 is bent by the second hinge structure 160, the second bendable portion 145 of the flexible display 140 may be folded so that the second unbendable portion 142 of the flexible display 140 and the third unbendable portion 143 of the flexible display 140 face different directions. The second bendable portion 145 may further include a first deformation portion 145a, a second deformation portion 145b, and a flat portion 145c. The first deformation portion 145a may be disposed between the flat portion 145c and the second unbendable portion 142, and the second deformation portion 145b may be disposed between the flat portion 145c and the third unbendable portion 143. The flat portion 145c may be disposed between the first deformation portion 145a and the second deformation portion 145b. The flat portion 145c may be supported by a support plate (e.g., a support plate 264 of FIG. 2A) that is distinct from hinge plates (e.g., a third hinge plate 262 and a fourth hinge plate 263 of FIG. 2A) of the second hinge structure 160. Regardless of a state of the electronic device 100, the flat portion 145c may maintain a flat surface. The first deformation portion 145a and the second deformation portion 145b may be unfolded in the first state 100a and the second state 100b, and in the third state 100c, the first deformation portion 145a and the second deformation portion 145b may be bent so that the second unbendable portion 142 and the third unbendable portion 143 face different directions. In the third state 100c, the first housing part 110 may be disposed between the second housing part 120 and the third housing part 130. In the third state 100c, the second bendable portion 145 of the flexible display 140 disposed on the second hinge structure 160 may partially face a side surface 110c of the first housing part 110.

A display area of the flexible display 140 (e.g. a first display, or main display) may include a first display area 140a, a second display area 140b, and the third display area 140c. The display area indicates an area capable of providing visual information from the flexible display 140. In the first state 100a, an entire display area of the flexible display 140 may be visible from the front surface of the housing structure 101. For example, in the first state 100a, the first display area 140a, the second display area 140b, and the third display area 140c of the flexible display 140 may be visually exposed. The electronic device 100 may provide a user with a large display area including the first display area 140a, the second display area 140b, and the third display area 140c.

In the second state 100b, the display area of the flexible display 140 may be partially visible from the front surface of the third housing part 130. For example, the third display area 140c may be visually exposed, and the first display area 140a and the second display area 140b may not be visually exposed.

The display area of the flexible display 140 may not be visible in the third state 100c. For example, in the third state 100c, the first display area 140a, the second display area 140b, and the third display area 140c of the flexible display 140 may not be visually exposed.

As a non-limiting example, when the flexible display 140 is used to display a screen in the first state 100a of the electronic device 100, the first display area 140a, the second display area 140b, and the third display area 140c of the flexible display 140 may be activated. As a non-limiting example, in the third state 100c, the first display area 140a, the second display area 140b, and the third display area 140c of the flexible display 140 may be deactivated. As a non-limiting example, when the flexible display 140 is used to display a screen in the second state 100b of the electronic device 100, the third display area 140c may be activated, and the first display area 140a and the second display area 140b of the flexible display 140 may be deactivated.

As a non-limiting example, when the flexible display 140 is used to display a screen in the first state 100a of the electronic device 100, the first display area 140a, the second display area 140b, and the third display area 140c of the flexible display 140 may display visual information. As a non-limiting example, in the third state 100c, the first display area 140a, the second display area 140b, and the third display area 140c of the flexible display 140 may provide a black image. As a non-limiting example, when the flexible display 140 is used to display a screen in the second state 100b of the electronic device 100, the third display area 140c may provide visual information, and the first display area 140a and the second display area 140b of the flexible display 140 may provide the black image.

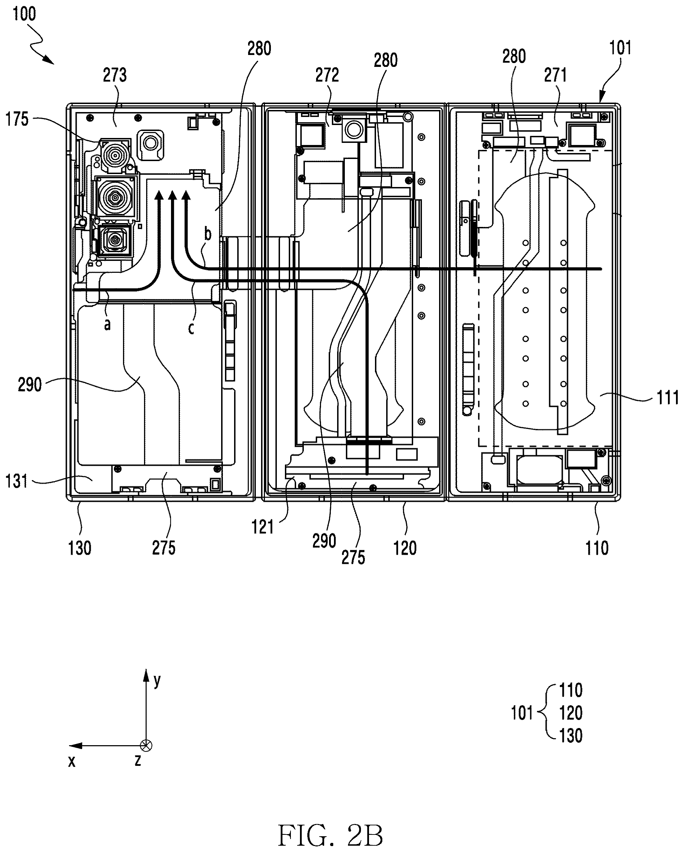

FIG. 2A is a plan view of an electronic device from which a flexible display is removed. FIG. 2B is a rear view of an electronic device from which a rear cover and a display are removed.

Referring to FIGS. 2A and 2B, an electronic device 100 may include a first hinge structure 150 and a second hinge structure 160. A first width w1 of the first hinge structure 150 may be narrower than a second width w2 of the second hinge structure 160. A difference between the first width w1 of the first hinge structure 150 and the second width w2 of the second hinge structure 160 may be equal to or greater than a thickness of a first housing part 110. For example, the second hinge structure 160 may have the second width w2 wider than the first width w1 so that the first housing part 110 is disposed between a second housing part 120 and a third housing part 130 according to a third state 100c. The first hinge structure 150 may be referred to as a narrow hinge structure in terms of having a narrower width than the second hinge structure 160. The second hinge structure 160 may be referred to as a wide hinge structure in terms of having a wider width than the first hinge structure 150.

The first hinge structure 150 may include a first set 251 of gears, a first hinge plate 252, and a second hinge plate 253. The first hinge plate 252 may be coupled to a first support portion 111 of the first housing part 110. The second hinge plate 253 may be coupled to a second support portion 121 of the second housing part 120. Gears g11, g12, g13, and g14 included in the first set 251 of the gears may be configured to rotate the first hinge plate 252 and the second hinge plate 253. For example, the gears g11, g12, g13, and g14 included in the first set 251 of the gears may rotate the second hinge plate 252 (or the second housing part 120) in conjunction with rotation of the first hinge plate 253 (or the first housing part 110). After the first hinge plate 252 (or the first housing part 110) is rotated, the gears g11, g12, g13, and g14 included in the first set 251 of the gears may be rotated according to the rotation of the first hinge plate 252 (or the first housing part 110). The second hinge plate 253 (or the second housing part 120) may be rotated in conjunction with the rotation of the first hinge plate 252 according to the rotation of the gears included in the first set 251 of the gears. The gears g11, g12, g13, and g14 included in the first set 251 of the gears may include the first gear g11, the second gear g12, the third gear g13, and the fourth gear g14. The first gear g11 may be disposed adjacent to the first hinge plate 252, and the fourth gear g14 may be disposed adjacent to the second hinge plate 253. The second gear g12 and the third gear g13 may be disposed between the first gear g11 and the fourth gear g14. The first gear g11, the second gear g12, the third gear g13, and the fourth gear g14 may be sequentially engaged. According to rotation of the first gear g11 in a first rotation direction (e.g., clockwise), the second gear g12 engaged with the first gear g11 may be rotated in a second rotation direction (e.g., counterclockwise) opposite to the first rotation direction. According to the rotation of the second gear g2 in the second rotation direction, the third gear g13 engaged with the second gear g12 may be rotated in the first rotation direction. The fourth gear g14 may be rotated in the second rotation direction according to the rotation of the third gear g13 in the first rotation direction. As the first gear g11 and the fourth gear g14 rotate in different directions, the first housing part 110 connected to the first hinge plate 252 and the second housing part 120 connected to the second hinge plate 253 may be folded or unfolded.

The second hinge structure 160 may include a second set 261 of gears, a third hinge plate 262, a fourth hinge plate 263, and a support plate 264. The third hinge plate 262 may be coupled to the second support portion 121 of the second housing part 120. The fourth hinge plate 263 may be coupled to a third support portion 131 of the third housing part 130. Gears g21, g22, g23, g24, g25, and g26 included in the second set 261 of the gears may be configured to rotate the third hinge plate 262 and the fourth hinge plate 263. For example, the gears g21, g22, g23, g24, g25, and g26 included in the second set 261 of the gears may rotate the fourth hinge plate 263 (or the third housing part 130) in conjunction with rotation of the third hinge plate 262 (or the second housing part 120). After the third hinge plate 262 (or the second housing part 120) is rotated, the gears g21, g22, g23, g24, g25, and g26 included in the second set 261 of the gears may be rotated according to the rotation of the third hinge plate 262 (or the second housing part 120). The fourth hinge plate 263 (or the third housing part 130) may be rotated in conjunction with the rotation of the third hinge plate 262 according to the rotation of the gears g21, g22, g23, g24, g25, and g26 included in the second set 261 of the gears.

The gears g21, g22, g23, g24, g25, and g26 included in the second set 261 of the gears may include the first gear g21, the second gear g22, the third gear g23, the fourth gear g24, the fifth gear g25, and the sixth gear g26. The first gear g21 may be disposed adjacent to the third hinge plate 262, and the sixth gear g26 may be disposed adjacent to the fourth hinge plate 263. The second gear g22, the third gear g23, the fourth gear g24, and the fifth gear g25 may be disposed between the first gear g21 and the sixth gear g26. The first gear g21, the second gear g22, the third gear g23, the fourth gear g24, the fifth gear g25, and the sixth gear g26 may be sequentially engaged. According to rotation of the first gear g21 in the first rotation direction (e.g., clockwise), the second gear g22 engaged with the first gear g21 may be rotated in the second rotation direction (e.g., counterclockwise) opposite to the first rotation direction. According to the rotation of the second gear g22 in the second rotation direction, the third gear g23 engaged with the second gear g22 may be rotated in the first rotation direction. According to the rotation of the third gear g23 in the first rotation direction, the fourth gear g24 may be rotated in the second rotation direction. According to the rotation of the fourth gear g24 in the second rotation direction, the fifth gear g25 engaged with the fourth gear g24 may be rotated in the first rotation direction. According to the rotation of the fifth gear g25 in the first rotation direction, the sixth gear g26 engaged with the fifth gear g25 may be rotated in the second rotation direction. As the first gear g21 and the sixth gear g26 rotate in different directions, the second housing part 120 connected to the third hinge plate 262 and the third housing part 130 connected to the fourth hinge plate 263 may be folded or unfolded.

The first hinge structure 150 and the second hinge structure 160 may further include a spiral structure. The spiral structure may include a spiral groove formed in each hinge plate or a rotating member connected to the hinge plate and a moving member sliding along the spiral groove. The hinge plates connected to the hinge structure may be configured to rotate at substantially the same angular displacement via the spiral structure.

The electronic device 100 may include a first printed circuit board 271, a second printed circuit board 272, and a third printed circuit board 273.

The first printed circuit board 271 may be disposed in the first support portion 111 of the first housing part 110. A hardware component in the first housing part 110 may be mounted on the first printed circuit board 271. The second printed circuit board 272 may be disposed on the second support portion 121 of the second housing part 120. The third printed circuit board 273 may be disposed in the third support portion 131 of the third housing part 130. A hardware component in the third housing part 130 may be mounted on the third printed circuit board 273.

A hardware component disposed in the first printed circuit board 271 may support a hardware component disposed in the second printed circuit board 272 and/or a hardware component disposed in the third printed circuit board 273 or may independently operate.

The hardware component disposed in the second printed circuit board 272 may support the hardware component disposed in the first printed circuit board 271 or the third printed circuit board 273 or may independently operate. The hardware component disposed in the second printed circuit board 272 may include a speaker, a front camera and/or display driving circuitry.

The hardware component disposed in the third printed circuit board 273 may include at least one processor (e.g., an application processor (AP) or a communication processor (CP)) including processing circuitry, memory including one or more storage mediums, communication circuitry, and a rear camera 175. The rear camera 175 may be exposed via a structure (e.g., an opening) of a rear surface of the second housing part 120.

The electronic device 100 may further include a sub-printed circuit board 275 and flexible printed circuit boards 280 and 290. The sub-printed circuit board 275 may be disposed in at least a portion of the first housing part 110, the second housing part 120, and the third housing part 130. The flexible printed circuit boards 280 and 290 may include the first flexible printed circuit board 280 and the second flexible printed circuit board 290. The first flexible printed circuit board 280 may electrically connect printed circuit boards disposed in each of the housing parts 110, 120, and 130. The second flexible printed circuit board 290 may connect a printed circuit board and the sub-printed circuit board 275 in the housing part, in which the sub-printed circuit board 275 is disposed, by the second flexible printed circuit board 290.

Components in the electronic device 100 may be connected to the at least one processor in the third printed circuit board 273 via the flexible printed circuit boards 280 and 290. For example, a signal received from an antenna disposed in the third housing part 130 may be transmitted to the third printed circuit board 273 in which the at least one processor (e.g., the AP or the CP) is disposed via a signal path (a) provided by the first flexible printed circuit board 280. Driving circuitry for a flexible display 140 disposed in the first housing part 110 may be connected to the third printed circuit board 273 in which the at least one processor (e.g., the AP) is disposed via a signal path (b) provided by the sub-printed circuit board 275 and the first flexible printed circuit board 280. Driving circuitry for a display 170 connected to the sub-printed circuit board 275 disposed in the second housing part 130 may be electrically connected to the third printed circuit board 273 in which the at least one processor (e.g., the AP) is disposed via a signal path (c) provided by the sub-printed circuit board 275, the first flexible printed circuit board 280, and the second flexible printed circuit board 290.

The electronic device 100 may further include batteries. Each of the batteries may be attached to the support portions 111, 121, and 131 included in the housing parts 110, 120, and 130. The support portions 111, 121, and 131 may support rechargeable batteries.

The disposition of the hardware components is exemplary, and differently from the above description, the rear camera 175 and the second printed circuit board 272 may be disposed in the third housing part 130, and the third printed circuit board 273 may be disposed in the second housing part 120.

The first housing part 110 and the third housing part 130 are indicated to rotate in an opposite direction relative to the second housing part 120, but are not limited thereto. For example, while changing from a first state 100a to a third state 100c, the first housing part 110 may rotate counterclockwise relative to the second housing part 120, and the third housing part 130 may rotate counterclockwise relative to the second housing part 120. As the first housing part 110 and the third housing part 130 rotate in the same direction, a portion of a display area of the flexible display 140 may be visually exposed in a second state.

According to an embodiment, a user interface of an application (e.g., a camera application, or a video call application) for obtaining an image related to an external environment may be displayed via a display (e.g., the flexible display 140 or the cover display 170) of the electronic device (e.g., the electronic device 100). A layout of the user interface may be changed based on a state of the electronic device according to a position relationship (e.g. positional relationship) between the housing parts of the electronic device. For an example, a position relationship may relate to an angle, or angular displacement, between the respective housing parts (e.g. first housing part 110, second housing part 120, third housing part 130) about the first hinge structure 150 and/or second hinge structure 160. The positional relationship may therefore relate to the identified state of the electronic device in respect of an identified (determined) angle (or angular displacement) of the housing parts around the first hinge structure 150 and/or second hinge structure 160. Hereinafter, an example of the user interface displayed on the display of the electronic device will be described based on the position relationship between the housing parts of the electronic device and/or an orientation of the electronic device.

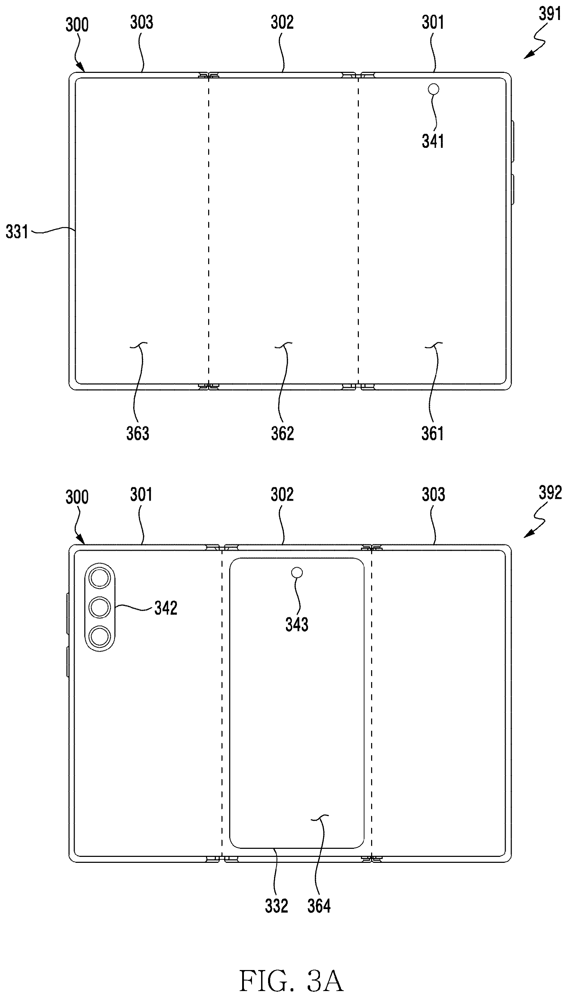

FIG. 3A illustrates an example of a simplified block diagram of an electronic device according to an embodiment.

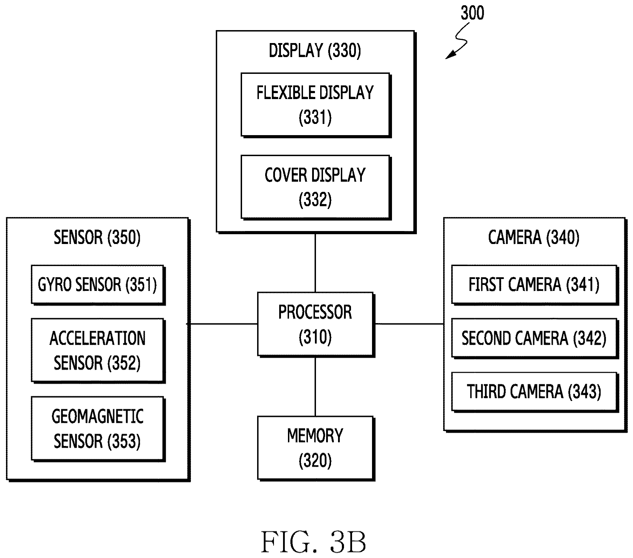

FIG. 3B illustrates an example of an electronic device according to an embodiment.

Referring to FIGS. 3A and 3B, an electronic device 300 may correspond to the electronic device 100 of FIGS. 1A, 1B, 1C, 2A and 2B. The electronic device 300 may include at least some or all of the components of the electronic device 100 of FIGS. 1A, 1B, 1C, 2A, and 2B.

Referring to FIG. 3A, an example 391 may indicate a front surface of the electronic device 300. An example 392 may indicate a rear surface of the electronic device 300.

According to an embodiment, the electronic device 300 may include a first housing part 301, a second housing part 302, and a third housing part 303. The first housing part 301 may correspond to the third housing part 130 of FIGS. 1A, 1B, 1C, 2A, and 2B. The second housing part 302 may correspond to the second housing part 120 of FIGS. 1A, 1B, 1C, 2A, and 2B. The third housing part 303 may correspond to the first housing part 110 of FIGS. 1A, 1B, 1C, 2A, and 2B.

For example, a flexible display 331 may correspond to the flexible display 140 of FIGS. 1A, 1B, 1C, 2A, and 2B. The flexible display 331 may include a first display area 361 corresponding to a first surface (e.g., a front surface) of the first housing part 301, a second display area 362 corresponding to a first surface (e.g., a front surface) of the second housing part 302, and a third display area 363 corresponding to a first surface (e.g., a front surface) of the third housing part 303. A cover display 332 may include a fourth display area 364 corresponding to a second surface (e.g., a rear surface) opposite the first surface of the second housing part 120.

According to an embodiment, the electronic device 300 may include a camera 340. For example, the camera 340 may include a first camera 341, a second camera 342, and a third camera 343.

As an example, the first camera 341 may be disposed on the first surface (e.g., the front surface) of the first housing part 301. The first camera 341 may be disposed to obtain an image related to an external environment in a direction in which the first display area 361 faces within the first display area 361.

As an example, the second camera 342 may be disposed on a second surface (e.g., a rear surface) of the first housing part 301. The second camera 342 may be disposed to obtain an image related to an external environment in a direction toward the second surface (e.g., the rear surface) of the first housing part 301.

As an example, the third camera 343 may be disposed on the second surface (e.g., the rear surface) of the second housing part 302. The third camera 343 may be disposed to obtain an image related to an external environment in a direction in which the fourth display area 364 faces within the fourth display area 364.

Although not illustrated, the electronic device 300 may include a first hinge structure that rotatably couples the first housing part 301 and the second housing part 302. The first hinge structure may be configured so that the first housing part 301 may be folded relative to the second housing part 302, even in a case that the third housing part 303 is folded relative to the second housing part 302. The first hinge structure may be configured so that the first housing part 301 may be folded relative to the second housing part 302, even in a case that the third housing part 303 is not folded relative to the second housing part 302. The first hinge structure may be referred to as a wide hinge. The first hinge structure may correspond to the second hinge structure 160 of FIGS. 1A, 1B, 1C, 2A, and 2B.

Although not illustrated, the electronic device 300 may include a second hinge structure that rotatably couples the second housing part 302 and the third housing part 303. The second hinge structure may correspond to the first hinge structure 150 of FIGS. 1A, 1B, 1C, 2A, and 2B.

Referring to FIG. 3B, the electronic device 300 may include a processor 310, memory 320, a display 330, the camera 340, and/or a sensor 350. According to an embodiment, the electronic device 300 may include at least one of the processor 310, the memory 320, the display 330, the camera 340, and/or the sensor 350. For example, at least some of the processor 310, the memory 320, the display 330, the camera 340, and/or the sensor 350 may be omitted according to an embodiment. Although not illustrated, the electronic device 300 may include various components in addition to the processor 310, the memory 320, the display 330, the camera 340, and the sensor 350.

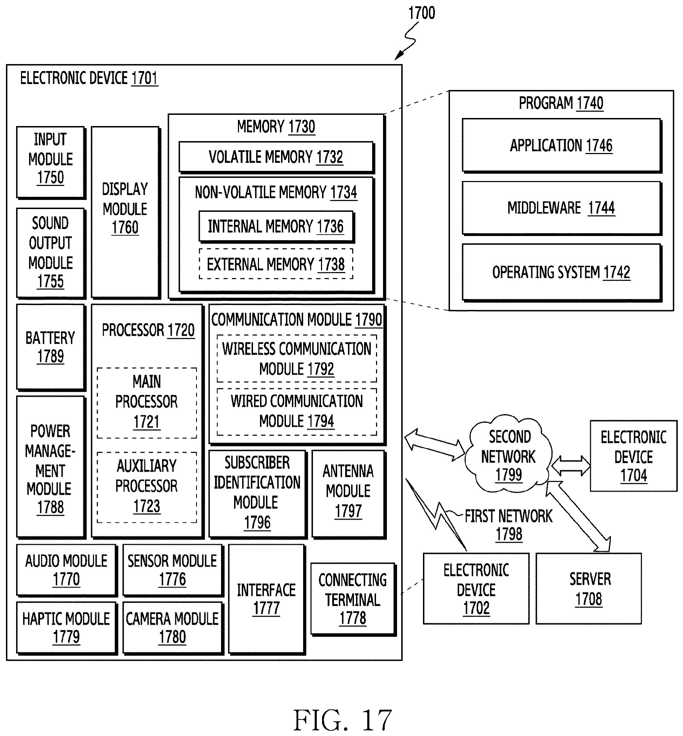

According to an embodiment, the electronic device 300 may include the processor 310. The processor 310 may be operably (or operatively) coupled with or connected with the memory 320, the display 330, the camera 340, and/or the sensor 350. The processor 310 being operably coupled with or connected with the memory 320, the display 330, the camera 340, and/or the sensor 350 may mean that the processor 310 may control the memory 320, the display 330, the camera 340, and/or the sensor 350. For example, the processor 310 may control the memory 320, the display 330, the camera 340, and/or the sensor 350. The memory 320, the display 330, the camera 340, and/or the sensor 350 may be controlled by the processor 310. For example, the processor 310 may be configured with at least one processor. For example, the processor 310 may correspond to a processor 1720 of FIG. 17.

According to an embodiment, the processor 310 may include a hardware component for processing data based on one or more instructions. The hardware component for processing data may include, for example, an arithmetic and logic unit (ALU), a field programmable gate array (FPGA), and/or a central processing unit (CPU).

According to an embodiment, the electronic device 300 may include the memory 320. For example, the memory 320 may correspond to memory 1730 of FIG. 17. For example, the memory 320 may be a volatile memory unit or units. For example, the memory 320 may be a nonvolatile memory unit or units. For example, the memory 320 may be another form of a computer-readable medium, such as a magnetic or optical disk. For example, the memory 320 may store data obtained based on an operation (e.g., an algorithm performance operation) performed by the processor 310.

For example, the memory 320 may be used to store one or more programs. The one or more programs may include instructions that, when executed by the processor 310 of the electronic device 300, cause the electronic device 300 to perform a defined operation. The memory 320 may include one or more storage mediums storing the instructions. The instructions may be individually and/or collectively executed by the processor 310 of the electronic device 300, to cause the electronic device 300 to perform a defined operation.

As an example, in the memory 320, one or more instructions indicating a calculation and/or an operation to be performed by the processor 310 on data may be stored. A set of the one or more instructions may be referred to as a firmware, an operating system, a process, a routine, a sub-routine and/or an application. For example, the electronic device 300 and/or the processor 310 may perform at least one of operations of the electronic device 300 described below when a set of a plurality of instructions distributed in a form of an operating system, a firmware, a driver, and/or an application is executed. Hereinafter, an application being installed in the electronic device 300 may mean that one or more instructions provided in a form of the application are stored in the memory 320 of the electronic device 300, and that the one or more applications are stored in a format (e.g., a file having an extension specified by an operating system of the electronic device 300) executable by the processor 310 of the electronic device 300.

According to an embodiment, the electronic device 300 may include the display 330. For example, the display 330 may include the flexible display 331 (e.g. a first, front or main display) and the cover display 332 (e.g. a second, or rear display) . The flexible display 331 may be deformable by an external force applied to the flexible display 331. The flexible display may be deformed according to a state of the electronic device 300 according to a position relationship between the first housing part 301, the second housing part 302, and the third housing part 303.

For example, the display 330 may correspond to a display module 1760 of FIG. 17. For example, the display 330 of the electronic device 300 may output visualized information to a user. The display 330 may include a Liquid Crystal Display (LCD), a Plasma Display Panel (PDP), one or more Light Emitting Diodes (LEDs), and/or one or more OLEDs. According to an embodiment, the display 330 may include a sensor (e.g., a touch sensor panel (TSP)) for detecting an external object (e.g., a user's finger) on the display 330. For example, based on the TSP, the electronic device 300 may detect the external object (e.g., the user's finger) contacted on the display 330 or floating on the display 330. In response to detecting the external object, the electronic device 300 may execute a function related to a specific visual object corresponding to a portion in the display 330 on which the external object is contacted among visual objects (e.g., a plurality of icons for capturing) displayed in the display 330.

According to an embodiment, the electronic device 300 may include the camera 340. For example, the camera 340 may correspond to a camera module 1780 of FIG. 17. For example, the camera 340 may include one or more optical sensors (e.g., a charged coupled device (CCD) sensor and a complementary metal oxide semiconductor (CMOS) sensor) that generate an electrical signal indicating a color and/or brightness of light. A plurality of optical sensors included in the camera 340 may be disposed in a form of a 2 dimensional array. The camera 340 may generate 2 dimensional frame data corresponding to light reaching the optical sensors of the 2 dimensional array by obtaining an electrical signal of each of the plurality of optical sensors substantially simultaneously. For example, photographic data captured using the camera 340 may mean a 2 dimensional frame data obtained from the camera 340. For example, video data captured using the camera 340 may mean a sequence of a plurality of 2 dimensional frame data obtained from the camera 340.

For example, the camera 340 may include the first camera 341, the second camera 342, and/or the third camera 343. The first camera 341 and the second camera 342 may be disposed in the first housing part 301. The first camera 341 may be disposed to face the first surface (e.g., the front surface) of the first housing part 301. The second camera 342 may be disposed to face the second surface (e.g., the rear surface) of the first housing part 301. The third camera 343 may be disposed in the second housing part 302. The second camera 342 may include at least one camera. The second camera 342 may include at least one of a wide camera, an ultrawide camera, and a telephoto camera.

According to an embodiment, the electronic device 300 may include the sensor 350. The sensor 350 of the electronic device 300 may generate electronic information that may be processed by the processor 310 and/or the memory 320 from non-electronic information related to the electronic device 300. The electronic information generated by the sensor 350 may be stored in the memory 320, processed by the processor 310, and/or transmitted to another electronic device distinct from the electronic device 300. The sensor 350 may be one or more.

For example, the sensor 350 may include a gyro sensor 351, an acceleration sensor 352, and a geomagnetic sensor 353. For example, the gyro sensor 351 may identify (or measure or detect) an angular velocity of the electronic device 300 in three directions of an x-axis, a y-axis, and a z-axis. The gyro sensor 351 may be configured to detect rotation of the electronic device 300. The gyro sensor 351 may be configured to detect a direction and speed in which the electronic device 300 rotates. For example, the acceleration sensor 352 may identify (or measure or detect) acceleration of the electronic device 300 in the three directions of the x-axis, the y-axis, and the z-axis. The acceleration sensor 352 may be configured to detect an inclination of the electronic device 300 as well as the acceleration due to gravity. The processor 310 of the electronic device 300 may identify whether the electronic device 300 moves by using the acceleration sensor 352. For example, the geomagnetic sensor 353 may detect a direction based on a magnetic field of the earth. The processor 310 may detect a direction in which a surface (e.g., a side surface) of the electronic device 300 faces by using the geomagnetic sensor 353.

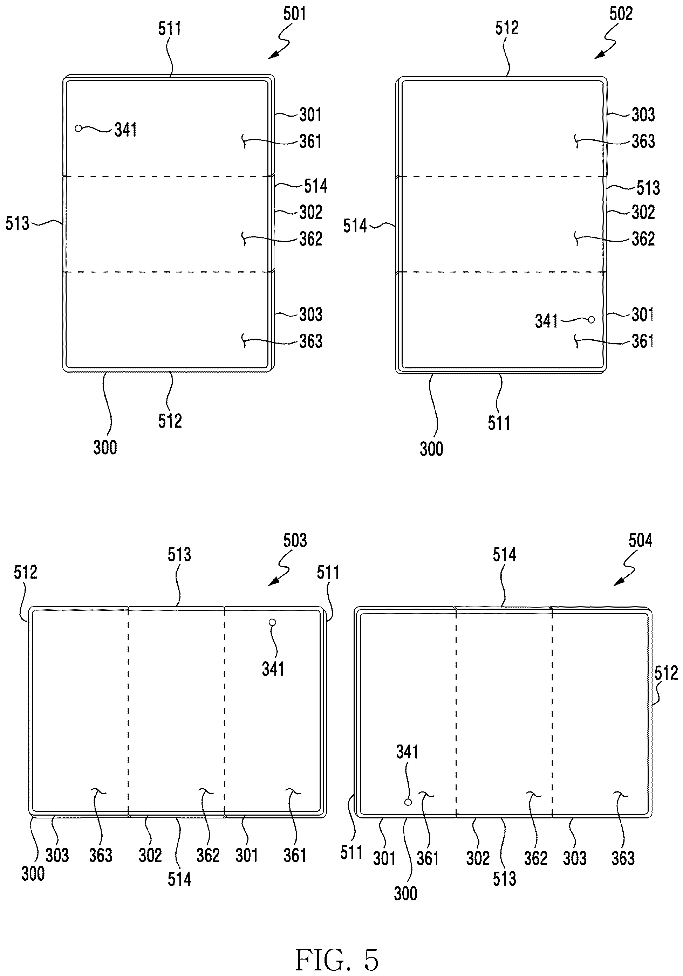

According to an embodiment, the electronic device 300 may identify an orientation of the electronic device 300 using the sensor 350. The orientation of the electronic device 300 may include a first orientation, a second orientation, a third orientation, and a fourth orientation. A specific example of the first orientation, the second orientation, the third orientation, and the fourth orientation will be described later in FIG. 5.

According to an embodiment, the processor 310 of the electronic device 300 may identify a first angle between the first surface (e.g., the front surface) of the first housing part 301 and the first surface (e.g., the front surface) of the second housing part 302 by using the sensor 350. The processor 310 of the electronic device 300 may identify a second angle between the first surface (e.g., the front surface) of the second housing part 302 and the first surface (e.g., the front surface) of the third housing part 303 by using the sensor 350.

For example, the sensor 350 may include at least one 6-axis sensor. The 6-axis sensor may include the gyro sensor 351 and the acceleration sensor 352. The processor 310 may identify (or detect) the first angle and the second angle by using the at least one 6-axis sensor. For example, a first 6-axis sensor may be disposed in the first housing part 301. A second 6-axis sensor may be disposed in the second housing part 302. A third 6-axis sensor may be disposed in the third housing part 303. The processor 310 may identify the first angle by using the first 6-axis sensor and the second 6-axis sensor. The processor 310 may identify the second angle by using the second 6-axis sensor and the third 6-axis sensor. However, it is not limited thereto.

According to an embodiment, the sensor 350 may include at least one Hall sensor. The processor 310 may identify (or detect) the first angle and the second angle by using the at least one Hall sensor. For example, a first Hall sensor may be disposed in the first housing part 301. A second Hall sensor may be disposed in the second housing part 302. A third Hall sensor may be disposed in the third housing part 303. The processor 310 may identify the first angle using the first Hall sensor and the second Hall sensor. The processor 310 may identify the second angle using the second Hall sensor and the third Hall sensor.

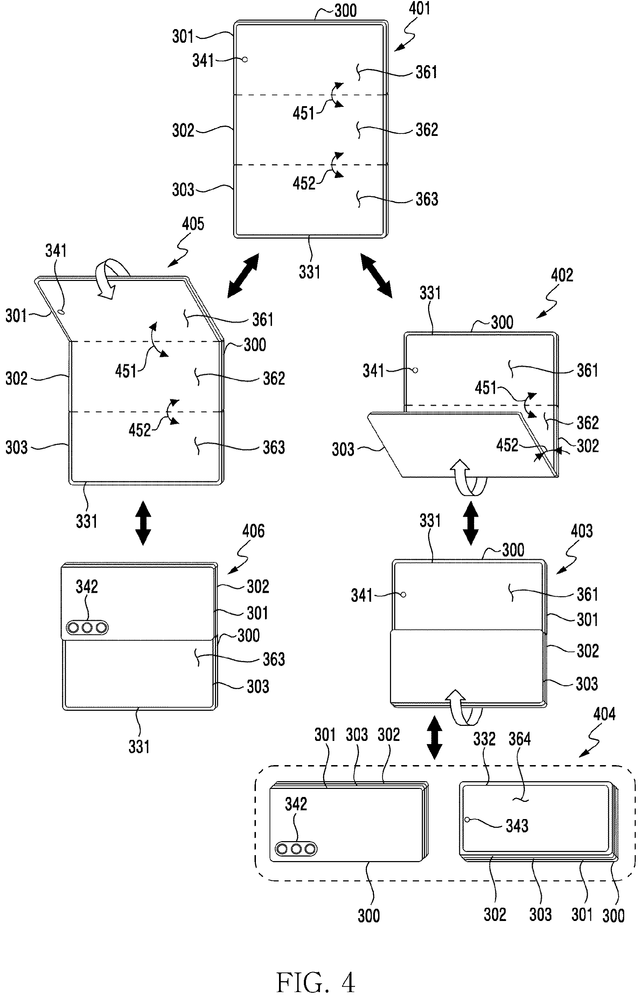

Hereinafter, an operation related to the electronic device 300 of FIGS. 3A and 3B will be described with reference to FIGS. 4 to 15. Although the operation described in FIGS. 4 to 15 is performed in the electronic device 300 of FIGS. 3A and 3B, this is for convenience of explanation, and the operation described in FIGS. 4 to 15 may also be performed in an electronic device of another form factor.

FIG. 4 illustrates an example of states of an electronic device according to an embodiment.

Referring to FIG. 4, a processor 310 may identify (or detect) a first angle 451 between a first surface (e.g., a front surface) (or a first display area 361) of a first housing part 301 and a first surface (e.g., a front surface) (or a second display area 362) of a second housing part 302 by using a sensor 350. The processor 310 may identify (or detect) a second angle 452 between the first surface (e.g., the front surface) (or the second display area 362) of the second housing part 302 and a first surface (e.g., a front surface) (or a third display area 363) of a third housing part 303 by using the sensor 350. The processor 310 may identify a state of an electronic device 300 based on the first angle and the second angle. The first angle 451 and the second angle 452 may indicate a position relationship between the housing parts of the electronic device 300.

An example 401 indicates a first state of the electronic device 300. In the example 401, the first angle 451 may be greater than a first reference angle (e.g., 178 degrees), and the second angle 452 may be greater than the first reference angle. The processor 310 may identify the state of the electronic device 300 as the first state based on identifying that the first angle 451 and the second angle 452 are greater (e.g. are each greater) than the first reference angle. The processor 310 may identify that the electronic device 300 is in the first state based on identifying that the first angle 451 and the second angle 452 are greater than the first reference angle. In the first state, substantially one plane may be provided via a flexible display 331. The first display area 361, the second display area 362, and the third display area 363 may be positioned on substantially one plane. In other words, in the first state, the first display area 361, the second display area 362, and the third display area 363 may be arranged on a same plane, so as to provide a substantially flat surface. The processor 310 may display a user interface on the first display area 361, the second display area 362, and the third display area 363 while the electronic device 300 is in the first state.

An example 403 indicates a second state of the electronic device 300. In the example 403, the first angle 451 may be greater than the first reference angle (e.g., 178 degrees), and the second angle 452 may be less than a second reference angle (e.g., 20 degrees). The processor 310 may identify the state of the electronic device 300 as the second state based on identifying that the first angle 451 is greater than the first reference angle (e.g., 178 degrees) and the second angle 452 is less than the second reference angle (e.g., 20 degrees). The processor 310 may identify that the electronic device 300 is in the second state based on identifying that the first angle 451 is greater than the first reference angle (e.g., 178 degrees) and the second angle 452 is less than the second reference angle (e.g., 20 degrees). That is, in the second state, as the first angle 451 is greater than the first reference angle, the first display area 361 and second display area 362 form a substantially flat surface. The third housing 303 is bent, or folded, toward the second housing 302, with the second reference angle therebetween, such that the third display area 363 faces the second display area 362, and therefore the second and third display areas are not exposed to the outside. In the second state, the first display area 361 may be exposed to the outside. The processor 310 may display the user interface on the first display area 361 (which is exposed, or visible, to the outside) while the electronic device 300 is in the second state.

An example 402 indicates a first semi-folded state of the electronic device 300. The first semi-folded state may be an intermediate state between the first state and the second state. In the example 402, the first angle 451 may be greater than the first reference angle (e.g., 178 degrees), the second angle 452 may be greater than or equal to the second reference angle (e.g., 20 degrees) and less than or equal to the first reference angle. The processor 310 may identify the state of the electronic device 300 as the first semi-folded state based on identifying that the first angle 451 is greater than the first reference angle and the second angle 452 is greater than or equal to the second reference angle and less than or equal to the first reference angle. The processor 310 may identify that the electronic device 300 is in the first semi-folded state based on identifying that the first angle 451 is greater than the first reference angle (e.g., 178 degrees) and the second angle 452 is greater than or equal to the second reference angle and less than or equal to the first reference angle. The processor 310 may determine the display areas on which to display the user interface based on the size of the second angle 452 while the electronic device 300 is in the first semi-folded state. The processor 310 may display the user interface on the first display area 361 and the second display area 362 in the first semi-folded state. According to an embodiment, the user interface may be displayed on the first display area 361, the second display area 362, and the third display area 363 in the first semi-folded state. For example, in the first semi-folded state, in a case that the second angle 452 is greater than a third reference angle (e.g., 90 degrees) and less than the first reference angle, the user interface may be displayed on the first display area 361, the second display area 362, and the third display area 363, as each of the first display area 361, second display area 362, and the third display area 363 may be at least partially exposed to the outside (e.g. visible to the user). According to an embodiment, the user interface may be displayed on the first display area 361 in the first semi-folded state. For example, in the first semi-folded state, in a case that the second angle 452 is less than or equal to the third reference angle (e.g., 90 degrees) and greater than or equal to the second reference angle, the user interface may be displayed on the first display area 361, which is exposed to the outside.

An example 404 indicates a third state of the electronic device 300. In the example 404, the first angle 451 may be less than the second reference angle (e.g., 20 degrees), and the second angle 452 may be less than the second reference angle (e.g., 20 degrees). The processor 310 may identify the state of the electronic device 300 as the third state based on identifying that the first angle 451 is less than the second reference angle and the second angle 452 is less than the second reference angle. The third state may be referred to as a folded state. The processor 310 may identify that the electronic device 300 is in the third state based on identifying that the first angle 451 is less than the second reference angle and the second angle 452 is less than the second reference angle. In the third state, a fourth display area 364 of a cover display 332 may be exposed to the outside. The first display area 361, second display area 362, and third display area 363 may not be exposed to the outside in the third (folded) state. In the third state, a second surface (e.g., a rear surface) of the first housing part 301 may be positioned opposite the cover display 332. In the third state, a second camera 342 may be positioned in a direction opposite to a direction in which the cover display 332 faces. The processor 310 may display the user interface on the fourth display area 364 of the cover display 332 while the electronic device 300 is in the third state.

An example 406 indicates a fourth state of the electronic device 300. In the example 406, the first angle 451 may be less than the second reference angle (e.g., 20 degrees), and the second angle 452 may be greater than the first reference angle. The processor 310 may identify the state of the electronic device 300 as the fourth state based on identifying that the first angle 451 is less than the second reference angle (e.g., 20 degrees) and the second angle 452 is greater than the first reference angle. The processor 310 may identify that the electronic device 300 is in the fourth state based on identifying that the first angle 451 is less than the second reference angle (e.g., 20 degrees) and the second angle 452 is greater than the first reference angle. That is, the first housing 301 and second housing 302 are folded with the first angle 451 (less than the second reference angle) therebetween, and first display area 361 and the second display area 362 are arranged to face toward each other, and are therefore not exposed to the outside. In the fourth state, the third display area 363 may be exposed to the outside. The processor 310 may display the user interface on the third display area 363 while the electronic device 300 is in the fourth state.

An example 405 indicates a second semi-folded state of the electronic device 300. The second semi-folded state may be an intermediate state between the first state and the fourth state. In the example 405, the first angle 451 may be greater than or equal to the second reference angle (e.g., 20 degrees) and less than or equal to the first reference angle, and the second angle 452 may be greater than the first reference angle (e.g., 178 degrees). The processor 310 may identify the state of the electronic device 300 as the second semi-folded state based on identifying that the first angle 451 is greater than or equal to the second reference angle (e.g., 20 degrees) and less than or equal to the first reference angle, and the second angle 452 is greater than the first reference angle (e.g., 178 degrees). The processor 310 may identify that the electronic device 300 is in the second semi-folded state based on identifying that the first angle 451 is greater than or equal to the second reference angle (e.g., 20 degrees) and less than or equal to the first reference angle, and the second angle 452 is greater than the first reference angle (e.g., 178 degrees). The processor 310 may determine the display areas on which to display the user interface based on the size of the second angle 452 while the electronic device 300 is in the second semi-folded state. The processor 310 may display the user interface on the first display area 361, the second display area 362, and the third display area 363 in the second semi-folded state. According to an embodiment, the user interface may be displayed on the second display area 362 and the third display area 363 in the second semi-folded state. For example, in the second semi-folded state, in a case that the first angle 451 is less than or equal to the third reference angle (e.g., 90 degrees), and greater than or equal to the second reference angle, the user interface may be displayed on the second display area 362 and the third display area 363. According to an embodiment, the user interface may be displayed on the third display area 363 in the second semi-folded state. For example, in the second semi-folded state, in the case that the first angle 451 is less than or equal to the third reference angle (e.g., 90 degrees) and greater than or equal to the second reference angle, the user interface may be displayed on the third display area 363.

Referring to the examples 401 to 406, the state of the electronic device 300 may be one of the first state, the second state, the third state, the fourth state, the first semi-folded state, and the second semi-folded state. A layout of the user interface of an application may be changed according to the state of the electronic device 300.

FIG. 5 illustrates an example of orientations of an electronic device according to an embodiment.

Referring to FIG. 5, a processor 310 of an electronic device 300 may identify an orientation of the electronic device 300 by using a sensor 350. The processor 310 may identify the orientation of the electronic device 300 as one of a first orientation to a fourth orientation by using the sensor 350. Herein, an orientation of the device may refer to the relative position, or direction, of the electronic device 300 being arranged in respect of a fixed position (e.g. for example, when taking a ground surface a reference point). For example, if the electronic device 300 is being held, or viewed, by a user, an orientation of the device may consider a part of the device (e.g. a housing part) as being positioned at a top (e.g. at a largest distance) relative to the fixed position (e.g. the ground surface) and another part of the device (e.g. another housing part) as being at a bottom (e.g. at smallest distance) to the same (ground) position. The orientation of the device may be identified by the one or more sensors.

In an example 501, the orientation of the electronic device 300 may correspond to the first orientation. In the example 501, the processor 310 may display a top of a user interface on a first display area 361 while the electronic device 300 is in a first state and the orientation of the electronic device 300 corresponds to the first orientation. The processor 310 may display a bottom of the user interface on a third display area 363 while the electronic device 300 is in the first state and the orientation of the electronic device 300 corresponds to the first orientation. For example, the first display area 361 may be identified by the one or more sensors to be at a top of the electronic device (e.g. as viewed by a user). That is, the processor 310 may display (or arrange) the layout or, orientation of the user interface (or the relative position of the user interface) based on the identified orientation of the electronic device 300, such that a top of the user interface is displayed to correspond to the top of the electronic device 300.

For example, while the orientation of the electronic device 300 corresponds to the first orientation, a first camera 341 may be positioned at a top left of a flexible display 331. For example, while the orientation of the electronic device 300 corresponds to the first orientation, a distance between a first housing part 301 and the ground may be greater than a distance between a third housing part 303 and the ground (that is, such that the first housing part 301 is relatively positioned on top, or upper of the third housing part 303). For example, while the orientation of the electronic device 300 corresponds to the first orientation, a periphery 511 (e.g. a side surface) of the first housing part 301 and a periphery 512 (e.g. a side surface) of the third housing part 303 may be substantially parallel to the ground. A periphery 513 and a periphery 514 of the electronic device 300 may be substantially perpendicular to the ground. For example, the periphery 511 and the periphery 512 may correspond to (e.g. be positioned along) a first axis (e.g., a y axis) of the electronic device 300 identified by the sensor 350 (e.g., an acceleration sensor 352) of the electronic device 300. The periphery 513 and the periphery 514 may correspond to (e.g. be positioned along) a second axis (e.g., an x axis) of the electronic device 300 identified by the sensor 350 (e.g., the acceleration sensor 352) of the electronic device 300. Based on identifying that an angle between the first axis of the electronic device 300 and the ground is within a reference range and that a distance between the first housing part 301 and the ground is greater than a distance between the third housing part 303 and the ground, the processor 310 may identify that the orientation of the electronic device 300 corresponds to the first orientation. Based on identifying that an angle between the second axis of the electronic device 300 and a direction in which the ground faces is within the reference range, and that the distance between the first housing part 301 and the ground is greater than the distance between the third housing part 303 and the ground, the processor 310 may identify that the orientation of the electronic device 300 corresponds to the first orientation.

In an example 502, the orientation of the electronic device 300 may correspond to the second orientation. In the example 502, the processor 310 may display the top of the user interface on the third display area 363 while the electronic device 300 is in the first state and the orientation of the electronic device 300 corresponds to the second orientation. The processor 310 may display the bottom of the user interface on the first display area 361 while the electronic device 300 is in the first state and the orientation of the electronic device 300 corresponds to the second orientation. For example, the third display area 363 may be identified by the one or more sensors to be at a top of the electronic device 300 (e.g. as viewed by a user) in the second orientation.

For example, while the orientation of the electronic device 300 corresponds to the second orientation, the first camera 341 may be positioned at a bottom right of the flexible display 331. For example, while the orientation of the electronic device 300 corresponds to the second orientation, the distance between the first housing part 301 and the ground may be smaller than the distance between the third housing part 303 and the ground. For example, while the orientation of the electronic device 300 corresponds to the second orientation, the periphery 511 of the first housing part 301 and the periphery 512 of the third housing part 303 may be substantially parallel to the ground. The periphery 513 and the periphery 514 of the electronic device 300 may be substantially perpendicular to the ground. For example, the periphery 511 and the periphery 512 may correspond to the first axis (e.g., the y axis) of the electronic device 300 identified by the sensor 350 (e.g., the acceleration sensor 352) of the electronic device 300. The periphery 513 and the periphery 514 may correspond to the second axis (e.g., the x axis) of the electronic device 300 identified by the sensor 350 (e.g., the acceleration sensor 352) of the electronic device 300. Based on identifying that the angle between the first axis of the electronic device 300 and the ground is within the reference range and that the distance between the first housing part 301 and the ground is less than the distance between the third housing part 303 and the ground, the processor 310 may identify that the orientation of the electronic device 300 corresponds to the second orientation. Based on identifying that the angle between the second axis of the electronic device 300 and the direction in which the ground faces is within the reference range and that the distance between the first housing part 301 and the ground is less than the distance between the third housing part 303 and the ground, the processor 310 may identify that the orientation of the electronic device 300 corresponds to the second orientation.

In an example 503, the orientation of the electronic device 300 may correspond to the third orientation. In the example 503, the processor 310 may display the top of the user interface at a top of each of the first display area 361, a second display area 362, and the third display area 363 while the electronic device 300 is in the first state and the orientation of the electronic device 300 corresponds to the third orientation. The processor 310 may display the bottom of the user interface at a bottom of each of the first display area 361, the second display area 362, and the third display area 363 while the electronic device 300 is in the first state and the orientation of the electronic device 300 corresponds to the third orientation. For example, the processor 310 may display a left area of the user interface on the third display area 363. The processor 310 may display a right area of the user interface on the first display area 361.

For example, while the orientation of the electronic device 300 corresponds to the third orientation, the first camera 341 may be positioned at a top right of the flexible display 331. For example, while the orientation of the electronic device 300 corresponds to the third orientation, a distance between each of the first housing part 301 to the third housing part 303 and the ground may be the same or similar. While the orientation of the electronic device 300 corresponds to the third orientation, a distance between the periphery 513 of the electronic device 300 and the ground may be greater than a distance between the periphery 514 of the electronic device 300 and the ground.

For example, while the orientation of the electronic device 300 corresponds to the third orientation, the periphery 511 of the first housing part 301 and the periphery 512 of the third housing part 303 may be perpendicular to the ground. The periphery 513 and the periphery 514 of the electronic device 300 may be substantially parallel to the ground. For example, the periphery 511 and the periphery 512 may correspond to the first axis (e.g., the y axis) of the electronic device 300 identified by the sensor 350 (e.g., the acceleration sensor 352) of the electronic device 300. The periphery 513 and the periphery 514 may correspond to the second axis (e.g., the x axis) of the electronic device 300 identified by the sensor 350 (e.g., the acceleration sensor 352) of the electronic device 300. The processor 310 may identify that the orientation of the electronic device 300 corresponds to the third orientation, based on identifying that the angle between the first axis of the electronic device 300 and the direction in which the ground faces is within the reference range and that the distance between the periphery 513 and the ground is greater than the distance between the periphery 514 and the ground. The processor 310 may identify that the orientation of the electronic device 300 corresponds to the third orientation, based on identifying that the angle between the second axis of the electronic device 300 and the ground is within the reference range and the distance between the periphery 513 and the ground is greater than the distance between the periphery 514 and the ground.

In an example 504, the orientation of the electronic device 300 may correspond to the fourth orientation. In the example 504, the processor 310 may display the top of the user interface at the bottom of each of the first display area 361, the second display area 361, and the third display area 363 while the electronic device 300 is in the first state and the orientation of the electronic device 300 corresponds to the fourth orientation. The processor 310 may display the bottom of the user interface at the top of each of the first display area 361, the second display area 361, and the third display area 363 while the electronic device 300 is in the first state and the orientation of the electronic device 300 corresponds to the fourth orientation. For example, the processor 310 may display the left area of the user interface on the first display area 361. The processor 310 may display the right area of the user interface on the third display area 363.

For example, while the orientation of the electronic device 300 corresponds to the fourth orientation, the first camera 341 may be positioned at a bottom left of the flexible display 331. For example, while the orientation of the electronic device 300 corresponds to the fourth orientation, the distance between each of the first housing part 301 to the third housing part 303 and the ground may be the same or similar. While the orientation of the electronic device 300 corresponds to the fourth orientation, the distance between the periphery 513 of the electronic device 300 and the ground may be smaller than the distance between the periphery 514 of the electronic device 300 and the ground.

For example, while the orientation of the electronic device 300 corresponds to the fourth orientation, the periphery 511 of the first housing part 301 and the periphery 512 of the third housing part 303 may be perpendicular to the ground. The periphery 513 and the periphery 514 of the electronic device 300 may be substantially parallel to the ground. For example, the periphery 511 and the periphery 512 may correspond to the first axis (e.g., the y axis) of the electronic device 300 identified by the sensor 350 (e.g., the acceleration sensor 352) of the electronic device 300. The periphery 513 and the periphery 514 may correspond to the second axis (e.g., the x axis) of the electronic device 300 identified by the sensor 350 (e.g., the acceleration sensor 352) of the electronic device 300. Based on identifying that the angle between the first axis of the electronic device 300 and the direction in which the ground faces is within the reference range, and that the distance between the periphery 513 and the ground is less than the distance between the periphery 514 and the ground, the processor 310 may identify that the orientation of the electronic device 300 corresponds to the fourth orientation. Based on identifying that the angle between the second axis of the electronic device 300 and the ground is within the reference range and the distance between the periphery 513 and the ground is less than the distance between the periphery 514 and the ground, the processor 310 may identify that the orientation of the electronic device 300 corresponds to the fourth orientation.

According to an embodiment, the processor 310 may operate in a portrait mode based on identifying that the orientation of the electronic device 300 corresponds to one of the first orientation and the second orientation. For example, a direction of a screen displayed in the first orientation may be opposite to a direction of a screen displayed in the second orientation. According to an embodiment, the processor 310 may operate in a landscape mode based on identifying that the orientation of the electronic device 300 corresponds to one of the third orientation and the fourth orientation. For example, a direction of a screen displayed in the third orientation may be opposite to a direction of a screen displayed in the fourth orientation.

In the following specification, based on the state of the electronic device 300 described in FIG. 4 and the orientation of the electronic device 300 described in FIG. 5, a technical feature of displaying an interface of an application (e.g., a camera application) for obtaining an image related to an external environment using a camera on the flexible display 331 will be described. For example, the interface may be displayed for self-photography via a camera.

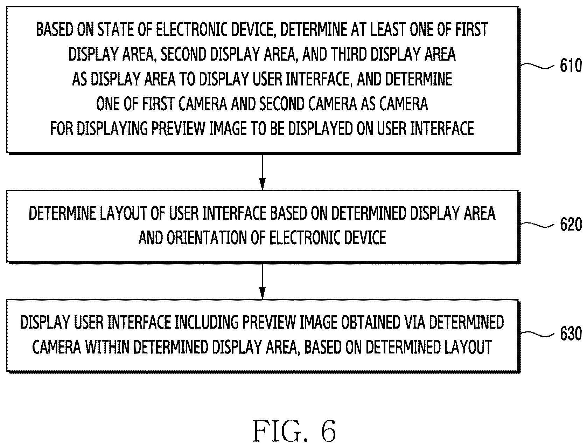

FIG. 6 illustrates a flowchart of an operation of an electronic device according to an embodiment. In the following embodiment, each of operations may be performed sequentially, but is not necessarily performed sequentially. For example, an order of each of the operations may be changed, and at least two operations may be performed in parallel.

Referring to FIG. 6, in an operation 610, based on a state of an electronic device 300, a processor 310 may determine at least one of a first display area 361, a second display area 362, and a third display area 363 as a display area to display a user interface, and determine one of a first camera 341 and a second camera 342 as a camera for displaying a preview image to be displayed on the user interface.

According to an embodiment, the processor 310 may identify that an application for obtaining an image related to an external environment (e.g. a camera application, or camera-using application) is executed by using one of the first camera 341 and the second camera 342. For example, the processor 310 may identify that a camera application is executed. The processor 310 may determine a display area to display a user interface of the executed application. The user interface may include the preview image obtained using a camera (e.g., the first camera 341, the second camera 342, and a third camera 343). The processor 310 may determine a camera for obtaining the preview image. The user interface may be configured for self-photography. For example, the processor 310 may identify an input to a visual object for setting a self- photography mode, included in the user interface. The processor 310 may display a screen for guiding rotation of a first housing part 301 relative to a second housing part 302 based on identifying the input.

According to an embodiment, the processor 310 may determine at least one of the first display area 361, the second display area 362, and the third display area 363 as the display to display the user interface based on the state of the electronic device 300. The processor 310 may determine a camera (e.g., the first camera 341, the second camera 342, and the third camera 343) for obtaining the preview image in the user interface (e.g. based on the identified state). For example, in each of the identified states, one (or more) of the first camera 341, the second camera 342 and the third camera 343 may be available (e.g. visible to the user/exposed to the outside) for performing the step of obtaining the preview image. The processor 310 may determine a camera for self-photography. The processor 310 may determine the camera for performing self-photography while a user of the electronic device 300 gazes at a flexible display 331.

According to an embodiment, the processor 310 may determine the first display area 361, the second display area 362, and the third display area 363 as a display area to display the user interface while the electronic device 300 is in a first state. The processor 310 may determine the first camera 341 as a camera for obtaining the preview image while the electronic device 300 is in the first state.

According to an embodiment, the processor 310 may determine the first display area 361 and the second display area 362 as a display area to display the user interface while the electronic device 300 is in a first semi-folded state. The processor 310 may determine the first camera 341 as a camera for obtaining the preview image while the electronic device 300 is in the first semi-folded state. According to an embodiment, while the electronic device 300 is in the first semi-folded state, the processor 310 may determine the first display area 361 and the second display area 362 as a display area to display the user interface in a case that a second angle 452 is greater than or equal to a third reference angle (e.g., 90 degrees). While the electronic device 300 is in the first semi-folded state, the processor 310 may determine the first camera 341 as a camera for obtaining the preview image in the case that the second angle 452 is greater than or equal to the third reference angle (e.g., 90 degrees). According to an embodiment, while the electronic device 300 is in the first semi-folded state, the processor 310 may determine the first display area 361 as a display area to display a user interface in a case that the second angle 452 is less than a third reference angle (e.g., 90 degrees). While the electronic device 300 is in the first semi-folded state, the processor 310 may determine the first camera 341 as a camera for obtaining the preview image in the case that the second angle 452 is less than the third reference angle (e.g., 90 degrees).

According to an embodiment, the processor 310 may determine the first display area 361 as a display area to display the user interface while the electronic device 300 is in a second state. The processor 310 may determine the first camera 341 as a camera for obtaining the preview image while the electronic device 300 is in the second state.

According to an embodiment, the processor 310 may determine a fourth display area 364 of a cover display 332 as a display area to display the user interface while the electronic device 300 is in a third state. The processor 310 may determine one of the second camera 342 and the third camera 343 as a camera for obtaining the preview image, while the electronic device 300 is in the third state.

According to an embodiment, the processor 310 may determine the first display area 361, the second display area 362, and the third display area 363 as a display area to display the user interface while the electronic device 300 is in a second semi-folded state. The processor 310 may determine the first camera 341 as a camera for obtaining the preview image while the electronic device 300 is in the second semi-folded state. According to an embodiment, while the electronic device 300 is in the second semi-folded state, the processor 310 may determine the first display area 361, the second display area 362, and the third display area 363 as a display area to display the user interface in the case that the second angle 452 is greater than or equal to the third reference angle (e.g., 90 degrees). While the electronic device 300 is in the second semi-folded state, the processor 310 may determine the first camera 341 as a camera for obtaining the preview image in a case that the second angle 452 is greater than or equal to the third reference angle (e.g., 90 degrees). According to an embodiment, in a case that a first angle 451 is less than the third reference angle (e.g., 90 degrees), the processor 310 may determine the third display area 363 as a display area to display the user interface. While the electronic device 300 is in the second semi-folded state, the processor 310 may determine the second camera 342 as a camera for obtaining the preview image in the case that the second angle 452 is greater than or equal to the third reference angle (e.g., 90 degrees).

According to an embodiment, the processor 310 may determine the third display area 363 as a display area for displaying the user interface while the electronic device 300 is in a fourth state. The processor 310 may determine the second camera 342 as a camera for obtaining the preview image while the electronic device 300 is in the fourth state.

In an operation 620, the processor 310 may determine a layout of the user interface based on the determined display area and an orientation of the electronic device 300. For example, the processor 310 may determine the layout of the user interface for the application based on the determined display area and the orientation of the electronic device 300 identified via a sensor 350.

According to an embodiment, the processor 310 may differently set the layout of the user interface according to the determined display area (or a size of the determined display area) and/or the orientation of the electronic device 300.

In an operation 630, the processor 310 may display the user interface including the preview image obtained via the determined camera in the determined display area, based on the determined layout.

According to an embodiment, regardless of the orientation of the electronic device 300, the processor 310 may display the user interface including the preview image obtained via the first camera 341 within the first display area 361, the second display area 362, and the third display area 363 while the electronic device 300 is in the first state. For example, based on an orientation of the electronic device 300 corresponding to a first orientation, the processor 310 may display a top of the user interface on the first display area 361. The processor 310 may display a bottom of the user interface on the third display area 363. For example, based on an orientation of the electronic device 300 corresponding to a second orientation, the processor 310 may display the top of the user interface on the third display area 363. The processor 310 may display the bottom of the user interface on the first display area 361. For example, based on an orientation of the electronic device 300 corresponding to a third orientation, the processor 310 may display a right side (or a right area) of the user interface on the first display area 361. The processor 310 may display a left side (or a left area) of the user interface on the third display area 363. For example, based on an orientation of the electronic device 300 corresponding to a fourth orientation, the processor 310 may display the left side (or the left area) of the user interface on the first display area 361. The processor 310 may display the right side (or the right area) of the user interface on the third display area 363.

According to an embodiment, the processor 310 may display the user interface including the preview image obtained via the first camera 341 in the first display area 362 while the electronic device 300 is in the first semi-folded state, based on the orientation of the electronic device 300 corresponding to the first orientation. The processor 310 may display a reference color (e.g., white, black, or gray) within the third display area 363 while the electronic device 300 is in the first semi-folded state, based on the orientation of the electronic device 300 corresponding to the first orientation. However, it is not limited thereto, and a display area and a camera may be changed according to the second angle 452.

According to an embodiment, the processor 310 may display a control area including a visual object for capturing the preview image obtained via the first camera 341 included in the user interface within the first display area 361 and the second display area 362 while the electronic device 300 is in the first semi-folded state, based on the orientation of the electronic device 300 corresponding to the second orientation. The processor 310 may display the preview image obtained via the first camera 341 within the third display area 363 while the electronic device 300 is in the first semi-folded state, based on the orientation of the electronic device 300 corresponding to the second orientation. However, it is not limited thereto, and a display area and a camera may be changed according to the second angle 452.

According to an embodiment, the processor 310 may display the user interface including the preview image obtained via the first camera 341 within the first display area 362 while the electronic device 300 is in the first semi-folded state based on the orientation of the electronic device 300 corresponding to the third orientation. However, it is not limited thereto, and a display area and a camera may be changed according to the second angle 452.

According to an embodiment, the processor 310 may display the user interface including the preview image obtained via the first camera 341 within the first display area 362 while the electronic device 300 is in the first semi-folded state based on the orientation of the electronic device 300 corresponding to the fourth orientation. However, it is not limited thereto, and a display area and a camera may be changed according to the second angle 452.

According to an embodiment, regardless of the orientation of the electronic device 300, the processor 310 may display the user interface including the preview image obtained via the first camera 341 within the first display area 361 while the electronic device 300 is in the second state. For example, the processor 310 may display the preview image obtained via the first camera 341 between an area where the first camera 341 is disposed within the first display area 361 and the visual object for capturing the preview image.

According to an embodiment, regardless of the orientation of the electronic device 300, the processor 310 may display the user interface including the preview image obtained via the third camera 343 in the fourth display area 364 of the cover display 332 while the electronic device 300 is in the third state.

According to an embodiment, the processor 310 may display the user interface including the preview image obtained via the first camera 341 within the first display area 361, the second display area 362, and the third display area 363 while the electronic device 300 is in the second semi-folded state, based on the orientation of the electronic device 300 corresponding to the first orientation. The processor 310 may display the preview image obtained via the first camera 341 within the first display area 361. The processor 310 may display the control area including the visual object for capturing the preview image obtained via the first camera 341 included in the user interface within the second display area 362 and the third display area 363. However, it is not limited thereto, and a display area and a camera may be changed according to the first angle 451.

According to an embodiment, the processor 310 may display the user interface including the preview image obtained via the first camera 341 within the second display area 362 and the third display area 363 while the electronic device 300 is in the second semi-folded state based on the orientation of the electronic device 300 corresponding to the second orientation. However, it is not limited thereto, and a display area and a camera may be changed according to the first angle 451.

According to an embodiment, the processor 310 may display the user interface including the preview image obtained via the first camera 341 within the second display area 362 and the third display area 363 while the electronic device 300 is in the second semi-folded state based on the orientation of the electronic device 300 corresponding to the third orientation. However, it is not limited thereto, and a display area and a camera may be changed according to the first angle 451.

According to an embodiment, the processor 310 may display the user interface including the preview image obtained via the first camera 341 within the second display area 362 and the third display area 363 while the electronic device 300 is in the second semi-folded state based on the orientation of the electronic device 300 corresponding to the fourth orientation. However, it is not limited thereto, and a display area and a camera may be changed according to the first angle 451.

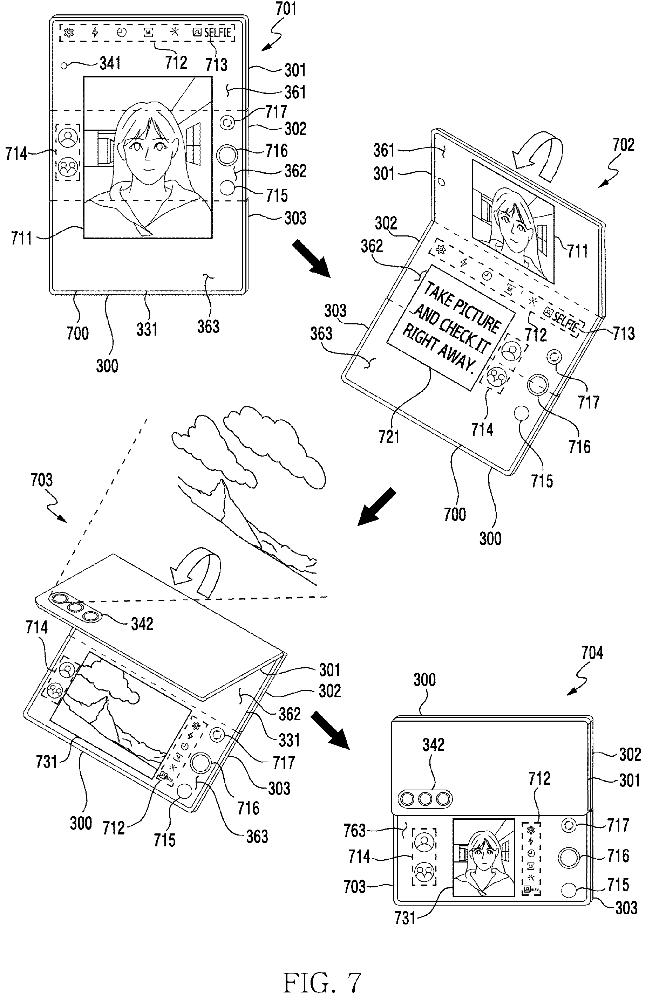

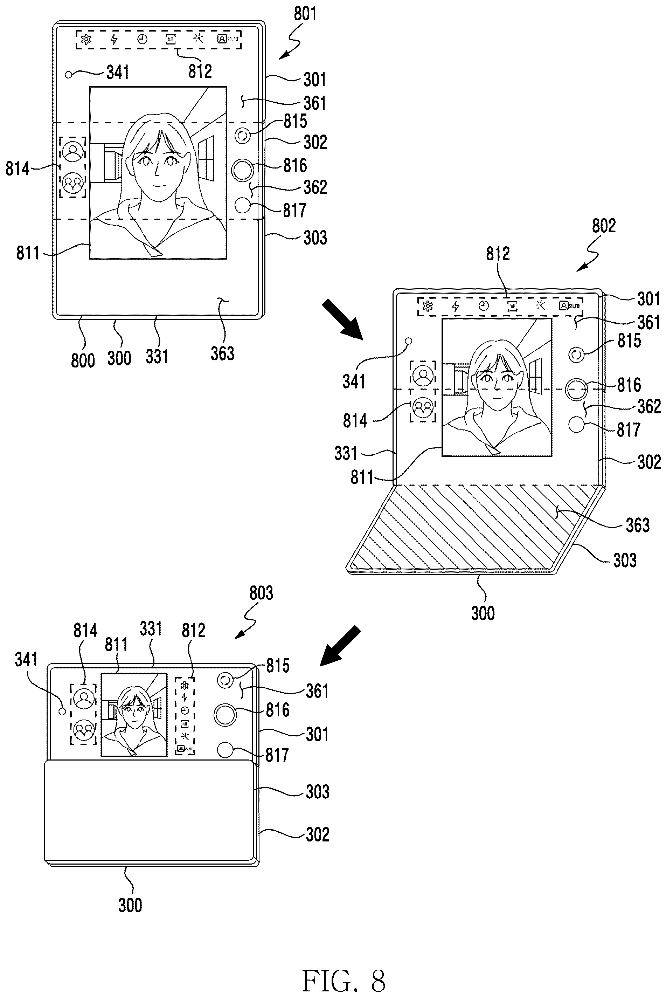

According to an embodiment, while the orientation of the electronic device 300 corresponds to the first orientation, the state of the electronic device 300 may be changed. While the orientation of the electronic device 300 corresponds to the first orientation, an example of a user interface according to the state of the electronic device 300 will be described later in FIGS. 7 and 8.

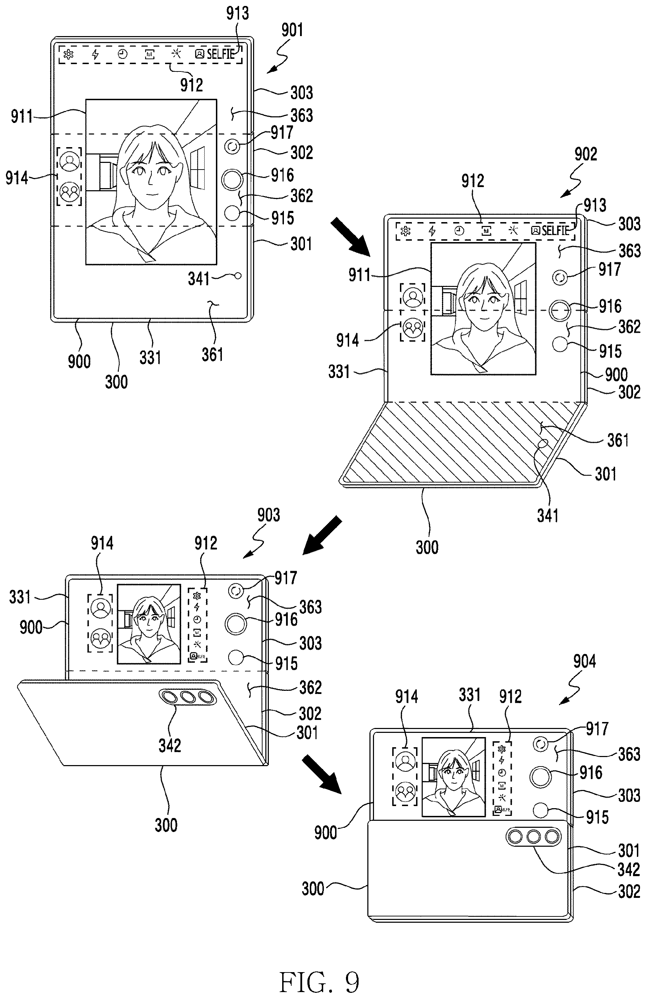

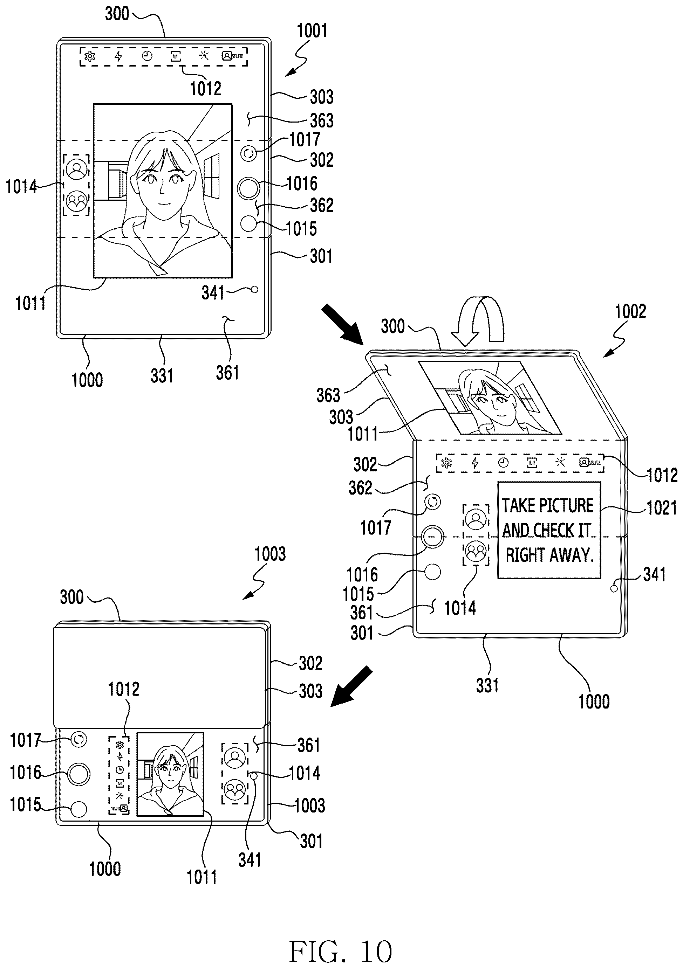

According to an embodiment, while the orientation of the electronic device 300 corresponds to the second orientation, the state of the electronic device 300 may be changed. While the orientation of the electronic device 300 corresponds to the second orientation, an example of a user interface according to the state of the electronic device 300 will be described later in FIGS. 9 and 10.

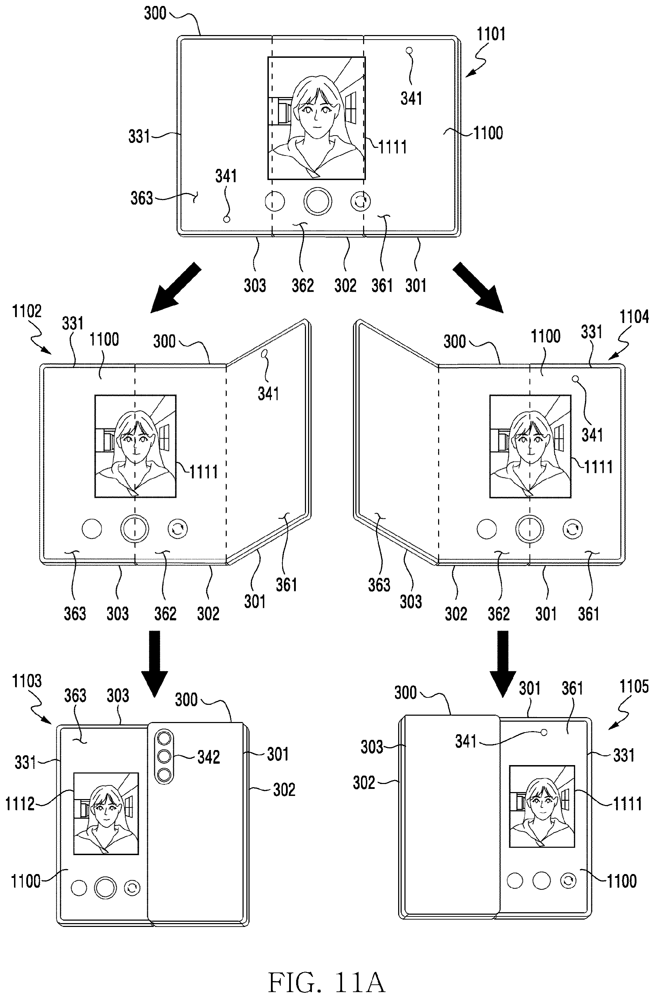

According to an embodiment, while the orientation of the electronic device 300 corresponds to the third orientation, the state of the electronic device 300 may be changed. While the orientation of the electronic device 300 corresponds to the second orientation, an example of a user interface according to the state of the electronic device 300 will be described later in FIG. 11A.

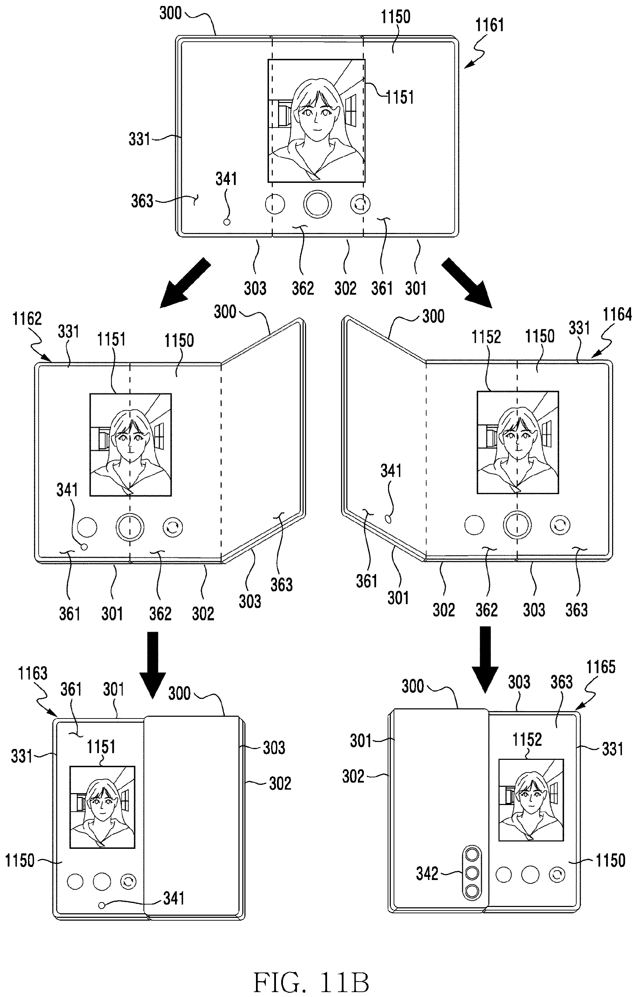

According to an embodiment, while the orientation of the electronic device 300 corresponds to the fourth orientation, the state of the electronic device 300 may be changed. While the orientation of the electronic device 300 corresponds to the fourth orientation, an example of a user interface according to the state of the electronic device 300 will be described later in FIG. 11B.

In the above-described embodiment, an example of a display area in which a user interface according to the state of the electronic device 300 and the orientation of the electronic device 300 is displayed and a camera to obtain a preview image has been described, but is not limited thereto. According to an embodiment, as the state of the electronic device 300 and/or the orientation of the electronic device 300 are changed, the display area in which the user interface is displayed and the camera to obtain the preview image may be changed.

FIG. 7 illustrates an example of a user interface according to a state change of an electronic device in a first orientation according to an embodiment. In the following description,. reference may be made to the preceding Figures and description described therein, where applicable.

Referring to FIG. 7, an orientation of an electronic device 300 may correspond to the first orientation. While the orientation of the electronic device 300 corresponds to the first orientation (e.g. while the electronic device 300 is identified as being in the first orientation) , an application (e.g., a camera application) for obtaining an image related to an external environment may be executed.

In a state 701, the electronic device 300 may be in a first state. A first camera 341 of the electronic device 300 may be positioned at a top left. A processor 310 may display a user interface of the application within a first display area 361, a second display area 362, and a third display area 363. A top of the user interface may be displayed on the first display area 361. A bottom of the user interface may be displayed on the third display area 363.

For example, the user interface may include a preview image 711 obtained via the first camera 341, objects 712 for changing a setting of an activated camera, objects 714 for changing a field of view (FoV) of the activated camera, an object 715 for checking a photo via a gallery application, an object 716 for capturing the preview image 711, and an object 717 for switching the activated camera from the first camera 341 to a second camera 342. For example, the objects 712 for changing the setting of the activated camera may include an object 713 for setting a self-photography mode.

In a state 702 and a state 703, the electronic device 300 may be in a second semi-folded state. In the state 702, a first angle 451 (e.g. between the first housing part 301 and the second housing part 302) may be greater than or equal to a third reference angle (e.g., 90 degrees) and less than or equal to a first reference angle (e.g., 178 degrees). In the state 703, the first angle 451 may be less than the third reference angle (e.g., 90 degrees) and greater than or equal to a second reference angle (e.g., 20 degrees).

In the state 702, the processor 310 may display a user interface including a preview image obtained via the first camera 341 within the first display area 361, the second display area 362, and the third display area 363. That is, in the state 702 (which is a second semi-folded state), each of the first display area 361, second display area 362, and third display area 363 may be exposed (e.g. visible to the user). For example, the processor 310 may display the preview image 711 obtained via the first camera 341 within the first display area 361. The processor 310 may display a control area for an application within the second display area 362 and the third display area 363. The control area may include the objects 712 for changing the setting of the activated camera, the objects 714 for changing the field of view (FoV) of the activated camera, the object 715 for checking the photo via the gallery application, the object 716 for capturing the preview image 711, and the object 717 for switching the activated camera from the first camera 341 to the second camera 342. The control area may display an area 721 for displaying a captured image related to the preview image 711.

In the state 703, the processor 310 may display a user interface including a preview image 731 obtained via the second camera 342 within the third display area 363. That is, in the state 703 (which is a further example of a second semi-folded state), the size of the first angle 451 has decreased such that the third display area 363 is exposed (e.g. visible to the user). For example, the processor 310 may display the user interface including the preview image 731 obtained via the second camera 342 within the third display area 363. The user interface may include the objects 712 for changing the setting of the activated camera, the objects 714 for changing the field of view (FoV) of the activated camera, the object 715 for checking the photo via the gallery application, the object 716 for capturing the preview image 711, and the object 717 for switching the activated camera from the second camera 342 to the first camera 341.

For example, according to a change from the state 702 to the state 703, the activated camera may be changed from the first camera 341 to the second camera 342. According to the change from the state 702 to the state 703, a display area for displaying the user interface may be changed from an entire area of a flexible display 331 to the third display area 363.

In a state 704, the electronic device 300 may be in a fourth state. The processor 310 may display the user interface of the application within the third display area 363. The user interface displayed within the third display area 363 may correspond to the user interface displayed in the state 703.

Referring to the state 701 to the state 703, as a display area (or a size of the display area) in which a user interface 700 is displayed is changed, a layout of the user interface 700 may be changed. The processor 310 may determine the layout of the user interface 700 based on identifying the display area in which the user interface 700 is displayed, and display the user interface 700 based on the determined layout. For example, according to the determined layout, a disposition of at least one of the objects 712 for changing the setting of the activated camera, the objects 714 for changing the field of view (FoV) of the activated camera, the object 715 for checking the photo via the gallery application, the object 716 for capturing the preview image 711, and the object 717 for switching the activated camera from the second camera 342 to the first camera 342 may be changed.

FIG. 8 illustrates an example of a user interface according to a state change of an electronic device in a first orientation according to an embodiment. In the following description,. reference may be made to the preceding Figures and description described therein, where applicable.

Referring to FIG. 8, an orientation of an electronic device 300 may correspond to the first orientation. While the orientation of the electronic device 300 corresponds to the first orientation, an application (e.g., a camera application) for obtaining an image related to an external environment may be executed.

In a state 801, the electronic device 300 may be in a first state . A processor 310 may display a user interface 800 of the application within a first display area 361, a second display area 362, and a third display area 363. The state 801 may correspond to the state 701 of FIG. 7. The user interface 800 may include objects 812 for changing a setting of an activated camera, objects 814 for changing a field of view (FoV) of the activated camera, an object 815 for checking a photo via a gallery application, an object 816 for capturing a preview image 811, and an object 817 for switching the activated camera from a second camera 342 to a first camera 341.

In a state 802, the electronic device 300 may be in a first semi-folded state. The processor 310 may display a user interface within the first display area 361 and the second display area 362. The user interface may include the preview image 811 obtained via the first camera 341.

The processor 310 may display a reference color (e.g., white, black, or gray) within the third display area 363. For example, the processor 310 may display the reference color within the third display area 363 to provide a lighting function via the third display area 363. The reference color may be changed according to illuminance of the external environment and/or a color of light of the external environment. The reference color may be changed by a user. According to an embodiment, a function for changing the reference color may be provided in the user interface displayed within the first display area 361 and the second display area 362. According to an embodiment, the processor 310 may identify a part (e.g., a face) of a user's body included in a preview image obtained using the first camera 341. The processor 310 may change illuminance and the reference color of the third display area 363 based on a color of the part (e.g., the face) of the user's body. According to an embodiment, the reference color may be changed according to a second angle 452. According to an embodiment, the processor 310 may deactivate the third display area 363 without displaying the reference color.

Although not illustrated, in a case that the second angle 452 is greater than a third reference angle (e.g., 90 degrees) and less than or equal to a first reference angle (e.g., 178 degrees), the processor 310 may display the user interface 800 on the first display area 361 and the second display area 362 and display the reference color on the third display area 363. In a case that the second angle 452 is less than the third reference angle, the processor 310 may display the user interface 800 only on the first display area 361.

In a state 803, the electronic device 300 may be in a second state. The processor 310 may display the user interface 800 including the preview image 811 obtained via the first camera 341 within the first display area 361.

Referring to the state 801 to the state 803, as a display area (or a size of the display area) in which the user interface 800 is displayed is changed, a layout of the user interface 800 may be changed. The processor 310 may determine the layout of the user interface 800 based on identifying the display area in which the user interface 800 is displayed, and display the user interface 800 based on the determined layout. For example, according to the determined layout, a disposition of at least one of the preview image 811, the objects 812 for changing the setting of an activated camera, the objects 814 for changing the field of view (FoV) of the activated camera, the object 815 for checking the photo via the gallery application, the object 816 for capturing the preview image 811, and the object 817 for switching the activated camera from the second camera 342 to the first camera 341 may be changed.

FIG. 9 illustrates an example of a user interface according to a state change of an electronic device in a second orientation according to an embodiment. In the following description,. reference may be made to the preceding Figures and description described therein, where applicable.

Referring to FIG. 9, an orientation of an electronic device 300 may correspond to the second orientation. While the orientation of the electronic device 300 corresponds to the second orientation, an application (e.g., a camera application) for obtaining an image related to an external environment may be executed.

In a state 901, the electronic device 300 may be in a first state. A first camera 341 of the electronic device 300 may be positioned at a bottom right. A processor 310 may display a user interface 900 of the application in a first display area 361, a second display area 362, and a third display area 363. A top of the user interface 900 may be displayed on the third display area 363. A bottom of the user interface 900 may be displayed on the first display area 361.

For example, a user interface may include a preview image 911 obtained via a first camera 341, objects 912 for changing a setting of an activated camera, objects 914 for changing a field of view (FoV) of the activated camera, objects 915 for checking a photo via a gallery application, objects 916 for capturing the preview image 911, and objects 917 for switching the activated camera from the first camera 341 to a second camera 342. For example, the objects 912 for changing the setting of the activated camera may include an object 913 for setting a self-photography mode.

In a state 902 and a state 903, the electronic device 300 may be in a second semi-folded state. In the state 902, a first angle 451 may be greater than or equal to a third reference angle (e.g., 90 degrees) and less than or equal to a first reference angle (e.g., 178 degrees). In the state 903, the first angle 451 may be less than the third reference angle (e.g., 90 degrees) and greater than or equal to a second reference angle (e.g., 20 degrees).

In the state 902, the processor 310 may display the user interface 900, including the preview image 911 obtained via the first camera 341, within the third display area 363 and the second display area 362. The first display area 361 may be deactivated.

In the state 903, the processor 310 may display the user interface 900 including the preview image 911 obtained via the second camera 342 within the third display area 363. The user interface 900 may include the objects 912 for changing the setting of the activated camera, the objects 914 for changing the field of view (FoV) of the activated camera, the objects 915 for checking the photo via the gallery application, the objects 916 for capturing the preview image 911, and the objects 917 for switching the activated camera from the second camera 342 to the first camera 341.

For example, according to a change from the state 902 to the state 903, the activated camera may be changed from the first camera 341 to the second camera 342. According to the change from the state 902 to the state 903, a display area for displaying the user interface 900 may be changed from a display area including the second display area 362 and the third display area 363 to the third display area 363.

In a state 904, the electronic device 300 may be in a fourth state. The processor 310 may display the user interface 900 of the application within the third display area 363. The user interface displayed within the third display area 363 may correspond to the user interface 900 displayed in the state 903.

Referring to the state 901 to the state 903, as the display area in which the user interface 900 is displayed is changed, a layout of the user interface 900 may be changed. The processor 310 may determine the layout of the user interface 900 based on identifying the display area in which the user interface 900 is displayed, and display the user interface 900 based on the determined layout. For example, according to the determined layout, a disposition of at least one of the objects 912 for changing the setting of the activated camera, the objects 914 for changing the field of view (FoV) of the activated camera, the objects 915 for checking the photo via the gallery application, the objects 916 for capturing the preview image 911, and the objects 917 for switching the activated camera from the second camera 342 to the first camera 341 may be changed, to improve the efficiency of utilization of the interface.

FIG. 10 illustrates an example of a user interface according to a state change of an electronic device in a second orientation according to an embodiment. In the following description, reference may be made to the preceding Figures and description described therein, where applicable.

Referring to FIG. 10, an orientation of an electronic device 300 may correspond to the second orientation. While the orientation of the electronic device 300 corresponds to the second orientation, an application (e.g., a camera application) for obtaining an image related to an external environment may be executed.

In a state 1001, the electronic device 300 may be in a first state. A processor 310 may display a user interface 1000 of the application within a first display area 361, a second display area 362, and a third display area 363. A bottom of the user interface 1000 may be displayed on the first display area 361. A top of the user interface 1000 may be displayed in the third display area 363. The state 1001 may correspond to the state 901 of FIG. 9. The user interface 1000 may include a preview image 1011 obtained via the first camera 341. The user interface 1000 may include objects 1012 for changing a setting of an activated camera, objects 1014 for changing a field of view (FoV) of the activated camera, an object 1015 for checking a photo via a gallery application, an object 1016 for capturing the preview image 1011, and an object 1017 for switching the activated camera from the first camera 341 to a second camera 342.

In a state 1002, the electronic device 300 may be in a second semi-folded state. The processor 310 may display the user interface 1000 within the first display area 361, the second display area 362, and the third display area 363. For example, the processor 310 may display the preview image 1011 obtained via the first camera 341 within the first display area 361. The processor 310 may display a control area for the application within the first display area 361 and the second display area 362. The control area may include the objects 1012 for changing the setting of the activated camera, the objects 1014 for changing the field of view (FoV) of the activated camera, the object 1015 for checking the photo via the gallery application, the object 1016 for capturing the preview image 1011, and the object 1017 for switching the activated camera from the first camera 341 to the second camera 342. The control area may display an area 1021 for displaying a captured image related to the preview image 1011. An image obtained according to an input to the object 1016 may be displayed in the area 1021.

For example, the objects 1014 for changing the field of view (FoV) of the activated camera, the object 1015 for checking the photo via the gallery application, the object 1016 for capturing the preview image 1011, and the object 1017 for switching the activated camera from the first camera 341 to the second camera 342 may be displayed on a left side of the user interface 1000. The area 1021 for displaying the captured image related to the preview image 1011 may be displayed on a right side of the user interface 1000 .

Since the first camera 341 is positioned at a bottom right, the processor 310 may display objects (e.g., the objects 1014 and/or the objects 1015) including the object 1016 for capturing the preview image 1011 on the left of the first display area 361 and the second display area 362. Since the object 1016 for capturing the preview image 1011 may be inputted by using a user's hand (e.g. a user input), the processor 310 may display the objects including the object 1016 for capturing the preview image 1011 on the left of the first display area 361 and the second display area 362 so that the user's hand is not exposed to a field of view of the first camera 341.

Although not illustrated, in a case that a first angle 451 is greater than a first reference angle, and a second angle 452 is greater than a third reference angle and less than or equal to the first reference angle, the processor 310 may display a control area of the user interface 1000 on the first display area 361 and the second display area 362. In a case the first angle 451 is greater than the first reference angle, and the second angle 452 is greater than the third reference angle and less than or equal to the first reference angle, the processor 310 may display the preview image 1011 obtained via the first camera 341 on the third display area 363. For example, in a case that the first angle 451 is greater than the first reference angle and the second angle 452 is less than the third reference angle, the processor 310 may display the user interface 1000 only on the first display area 361.

In a state 1003, the electronic device 300 may be in a second state. The processor 310 may display the user interface 1000 including the preview image 1011 obtained via the first camera 341 within the first display area 361.

Referring to the state 1001 to the state 1003, as a display area in which the user interface 1000 is displayed is changed, a layout of the user interface 1000 may be changed. The processor 310 may determine the layout of the user interface 1000 based on identifying the display area in which the user interface 1000 is displayed, and display the user interface 1000 based on the determined layout. For example, according to the determined layout, a disposition of at least one of the objects 1012 for changing the setting of the activated camera, the objects 1014 for changing the field of view (FoV) of the activated camera, the object 1015 for checking the photo via the gallery application, the object 1016 for capturing the preview image 1011, and the object 1017 for switching the activated camera from the second camera 342 to the first camera 341 may be changed.

FIG. 11A illustrates an example of a user interface according to a state change of an electronic device in a third orientation according to an embodiment. In the following description,. reference may be made to the preceding Figures and description described therein, where applicable.

Referring to FIG. 11A, an orientation of an electronic device 300 may correspond to the third orientation. While the orientation of the electronic device 300 corresponds to the third orientation, an application (e.g., a camera application) for obtaining an image related to an external environment may be executed.

In a state 1101, the electronic device 300 may be in a first state. A processor 310 may display a user interface 1100 of the application within a first display area 361, a second display area 362, and a third display area 363. The user interface 1100 may include a preview image 1111 obtained using a first camera 341. For example, the processor 310 may determine a layout of the user interface 1100 corresponding to a size of the first display area 361, the second display area 362, and the third display area 363. The processor 310 may display the user interface 1100 within the first display area 361, the second display area 362, and the third display area 363 based on the determined layout.

In a state 1102, the electronic device 300 may be in a second semi-folded state. The processor 310 may display the user interface 1100 of the application within the second display area 362 and the third display area 363. The user interface 1100 may include the preview image 1111 obtained using the first camera 341. For example, the processor 310 may determine a layout of the user interface 1100 corresponding to a size of the second display area 362 and the third display area 363. The processor 310 may display the user interface 1100 within the second display area 362 and the third display area 363 based on the determined layout.

In a state 1103, the electronic device 300 may be in a fourth state. The processor 310 may display the user interface 1100 of the application within the third display area 363. The user interface 1100 may include a preview image 1112 obtained using a second camera 342. For example, the processor 310 may determine a layout of the user interface 1100 corresponding to a size of the third display area 363. The processor 310 may display the user interface 1100 within the third display area 363 based on the determined layout. For example, the processor 310 may change a camera for obtaining a preview image from the first camera 341 to the second camera 342 based on identifying that a state of the electronic device 300 changes from the second semi-folded state to the fourth state. The processor 310 may display the user interface 1100 including the preview image 1112 obtained via the second camera 342 while the electronic device 300 is in the fourth state.

In a state 1104, the electronic device 300 may be in a first semi-folded state. The processor 310 may display the user interface 1100 of the application within the first display area 361 and the second display area 362. The user interface 1100 may include the preview image 1111 obtained using the first camera 341. For example, the processor 310 may determine a layout of the user interface 1100 corresponding to a size of the first display area 361 and the second display area 362. The processor 310 may display the user interface 1100 within the first display area 361 and the second display area 362 based on the determined layout. For example, based on identifying that the state of the electronic device 300 changes from the first state to the first semi-folded state, the processor 310 may change a display area for displaying the user interface 1100 from an entire display area of a flexible display 331 to a display area including the first display area 361 and the second display area 362.

In a state 1105, the electronic device 300 may be in a second state. The processor 310 may display the user interface 1100 of the application within the first display area 361. The user interface 1100 may include the preview image 1111 obtained using the first camera 341. For example, the processor 310 may determine a layout of the user interface 1100 corresponding to a size of the first display area 361. The processor 310 may display the user interface 1100 within the first display area 361 based on the determined layout. For example, the processor 310 may maintain a camera for obtaining a preview image as the first camera 341 based on identifying that the state of the electronic device 300 changes from the first semi-folded state to the second state. The processor 310 may display the user interface 1100 including the preview image obtained via the first camera 341 while the electronic device 300 is in the second state.

FIG. 11B illustrates an example of a user interface according to a state change of an electronic device in a fourth orientation according to an embodiment.

Referring to FIG. 11B, an orientation of an electronic device 300 may correspond to the fourth orientation. While the orientation of the electronic device 300 corresponds to the fourth orientation, an application (e.g., a camera application) for obtaining an image related to an external environment may be executed.

In a state 1161, the electronic device 300 may be in a first state. A processor 310 may display a user interface 1150 of the application within a first display area 361, a second display area 362, and a third display area 363. The user interface 1150 may include a preview image 1151 obtained using a first camera 341. For example, the processor 310 may determine a layout of the user interface 1150 corresponding to a size of the first display area 361, the second display area 362, and the third display area 363. The processor 310 may display the user interface 1150 within the first display area 361, the second display area 362, and the third display area 363 based on the determined layout.

In a state 1162, the electronic device 300 may be in a first semi-folded state. The processor 310 may display the user interface 1150 of the application within the first display area 361 and the second display area 362. The user interface 1150 may include the preview image 1151 obtained using the first camera 341. For example, the processor 310 may determine a layout of the user interface 1150 corresponding to a size of the first display area 361 and the second display area 362. The processor 310 may display the user interface 1150 within the first display area 361 and the second display area 362 based on the determined layout. For example, based on identifying that a state of the electronic device 300 changes from the first state to the first semi-folded state, the processor 310 may change a display area for displaying the user interface 1150 from an entire display area of a flexible display 331 to a display area including the first display area 361 and the second display area 362.

In a state 1163, the electronic device 300 may be in a second state. The processor 310 may display the user interface 1150 of the application within the first display area 361. The user interface 1150 may include the preview image obtained using the first camera 341. For example, the processor 310 may determine a layout of the user interface 1150 corresponding to a size of the first display area 361. The processor 310 may display the user interface 1150 within the first display area 361 based on the determined layout. For example, based on identifying that the state of the electronic device 300 changes from the first semi-folded state to the second state, the processor 310 may change the display area for displaying the user interface 1150 from the display area including the first display area 361 and the second display area 362 to the first display area 361.

In a state 1164, the electronic device 300 may be in a second semi-folded state. The processor 310 may display the user interface 1150 of the application within the second display area 362 and the third display area 363. The user interface 1150 may include a preview image 1152 obtained using the first camera 341. For example, the processor 310 may determine a layout of the user interface 1150 corresponding to a size of the second display area 362 and the third display area 363. The processor 310 may display the user interface 1150 within the second display area 362 and the third display area 363 based on the determined layout.

In a state 1165, the electronic device 300 may be in a fourth state. The processor 310 may display the user interface 1150 of the application within the third display area 363. The user interface 1150 may include s preview image 1152 obtained using a second camera 342. For example, the processor 310 may determine a layout of the user interface 1150 corresponding to a size of the third display area 363. The processor 310 may display the user interface 1150 within the third display area 363, based on the determined layout. For example, the processor 310 may change a camera for obtaining a preview image from the first camera 341 to the second camera 342 based on identifying that the state of the electronic device 300 changes from the second semi-folded state to the fourth state. The processor 310 may display the user interface 1150 including the preview image 1152 obtained via the second camera 342 while the electronic device 300 is in the fourth state.

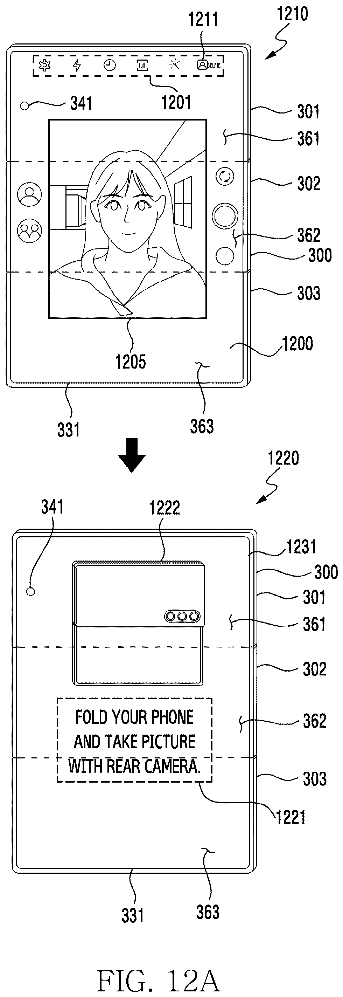

FIG. 12A illustrates an example of a screen for guiding a transition from a first orientation to a self-photography mode according to an embodiment. In the following description,. reference may be made to the preceding Figures and description described therein, where applicable.

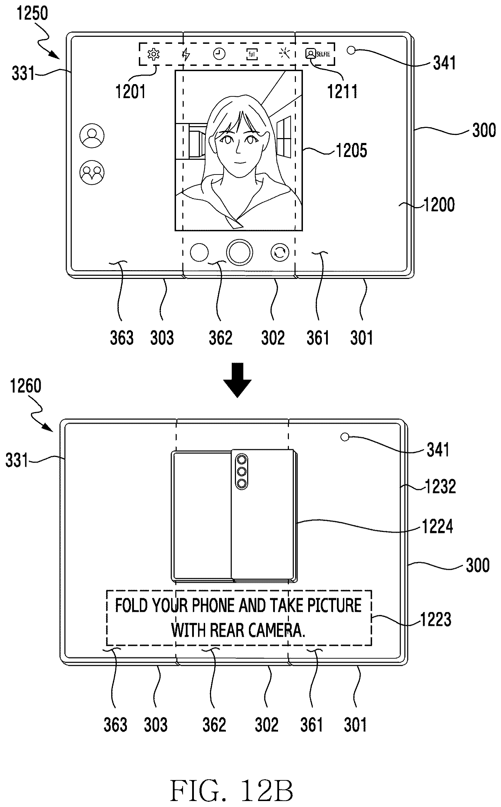

FIG. 12B illustrates an example of a screen for guiding a transition from a third orientation to a self-photography mode according to an embodiment.

Referring to FIG. 12A, an orientation of an electronic device 300 may correspond to the first orientation. While the orientation of the electronic device 300 corresponds to the first orientation, an application (e.g., a camera application) for obtaining an image related to an external environment may be executed.

In a state 1210, a processor 310 may display a user interface 1200 for the application in a flexible display 331. The processor 310 may display the user interface 1200 within a first display area 361, a second display area 362, and a third display area 363.

The user interface 1200 may include a preview image 1205 obtained via a first camera 341. The user interface 1200 may include objects 1201 for controlling an activated camera. For example, the objects 1201 may include an object 1211 for a self-photography mode (e.g. for executing, or entering, a self-photography mode). The self-photography mode may be a mode for performing self-photography using a second camera 342 disposed on a rear surface of the electronic device 300. The second camera 342 may have a higher resolution and/or performance than the first camera 341. For example, the second camera 342 may provide a wider dynamic range than the first camera 341. In a case that the second camera 342 is used, a clearer and brighter image than an image obtained via the first camera 341 may be obtained. Therefore, the processor 310 may provide the self-photography mode that may obtain a higher resolution image even when performing self-photography.

In a state 1220, the processor 310 may display a screen for guiding (e.g. for guiding the user) to change a state of the electronic device 300 to operate in the self-photography mode based on an input to the object 1211. For example, the processor 310 may display a screen 1231 via the flexible display 331 based on the input to the object 1211. The screen 1231 may be displayed within the first display area 361, the second display area 362, and the third display area 363.

For example, the screen 1231 may include text 1221 and a visual object 1222 for guiding a state of the electronic device 300 to rotate a first housing part 301 relative to a second housing part 302. The visual object 1222 may be configured so that an object indicating a first state and an object indicating a fourth state change over time. The visual object 1222 may be displayed as an animated image for indicating a transition from the first state to the fourth state.

Referring to FIG. 12B, an orientation of the electronic device 300 may correspond to the third orientation. While the orientation of the electronic device 300 corresponds to the third orientation, an application (e.g., a camera application) for obtaining an image related to an external environment may be executed.

In a state 1250, the processor 310 may display the user interface 1200 for the application in the flexible display 331. The processor 310 may display the user interface 1200 within the first display area 361, the second display area 362, and the third display area 363.

The user interface 1200 may include the preview image 1205 obtained via the first camera 341. The user interface 1200 may include objects 1201 for controlling the activated camera. For example, the objects 1201 may include the object 1211 for the self-photography mode.

In a state 1260, the processor 310 may display a screen for guiding (e.g. for guiding the user) to change a state of the electronic device 300 to operate in the self-photography mode based on an input to an object 1211. For example, the processor 310 may display a screen 1232 via the flexible display 331 based on the input to the object 1211. The screen 1232 may be displayed within the first display area 361, the second display area 362, and the third display area 363.

For example, the screen 1232 may include text 1223 and a visual object 1224 for guiding a state of the electronic device 300 to rotate the first housing part 301 relative to the second housing part 302. The visual object 1224 may be configured so that an object indicating a first state and an object indicating a fourth state change over time. The visual object 1224 may be displayed as an animated image for indicating a transition from the first state to the fourth state.

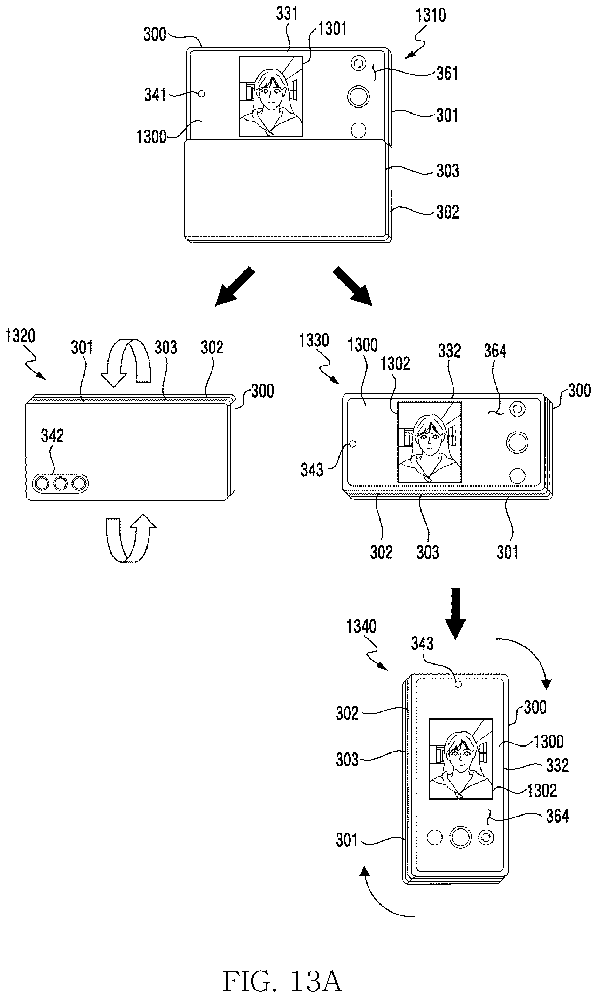

FIG. 13A illustrates an example of an operation of an electronic device according to an embodiment.

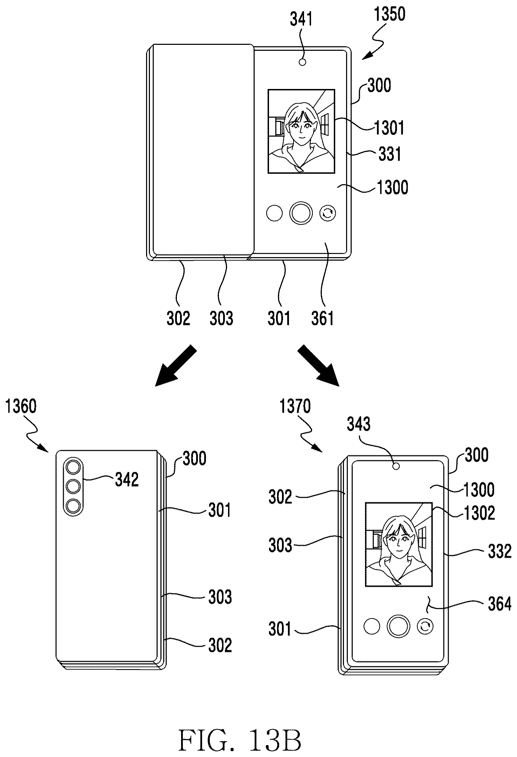

FIG. 13B illustrates an example of an operation of an electronic device according to an embodiment.

Referring to FIG. 13A, an orientation of an electronic device 300 may correspond to a first orientation. While the orientation of the electronic device 300 corresponds to the first orientation, an application (e.g., a camera application) for obtaining an image related to an external environment may be executed.

In a state 1310, the electronic device 300 may be in a second state. While the electronic device 300 is in the second state, the application (e.g., the camera application) for obtaining the image related to the external environment may be executed. While the electronic device 300 is in the second state, a processor 310 may display a user interface 1300 for the application in a first display area 361. The user interface 1300 may include a preview image 1301 obtained via a first camera 341.

According to an embodiment, the processor 310 may rotate a first housing part 301 relative to a second housing part 302 and a third housing part 303. A state of the electronic device 300 may be changed from the state 1310 to a state 1320, according to the rotation of the first housing part 301.

According to an embodiment, the processor 310 may rotate the second housing part 302 and the third housing part 303 relative to the first housing part 301. The state of the electronic device 300 may be changed from the state 1310 to a state 1330 according to the rotation of the second housing part 302 and the third housing part 303.

In the state 1320, a second surface (e.g., a rear surface) of the first housing part 301 may face a user. A second camera 342 may face the user.

For example, the processor 310 may cease execution of the application (e.g., the camera application) based on identifying that the second camera 342 faces the user. For example, the processor 310 may cease the execution of the application (e.g., the camera application) based on identifying that the second surface (e.g., the rear surface) of the first housing part 301 faces the user. For example, the processor 310 may cease the execution of the application (e.g., the camera application) based on identifying that the first housing part 301 is rotated relative to the second housing part 302 and the third housing part 303.

In the state 1330, a second surface (e.g., a rear surface) of the second housing part 302 may face the user. A cover display 332 may face the user. A third camera 343 may face the user.

For example, the processor 310 may display the user interface 1300 within a fourth display area 364 of the cover display 332 based on identifying that the third camera 343 faces the user. For example, the user interface 1300 may be displayed within the fourth display area 364 of the cover display 332 based on identifying that the third camera 343 faces the user. The user interface 1300 may include a preview image 1302 obtained via the third camera 343.

For example, the processor 310 may display the user interface 1300 within the fourth display area 364 of the cover display 332 based on identifying that the first housing part 301 is rotated relative to the second housing part 302 and the third housing part 303. For example, the user interface 1300 in a landscape mode may be displayed within the fourth display area 364 based on an orientation of the electronic device 300 according to the state 1330.

According to an embodiment, the state of the electronic device 300 may be changed from the state 1330 to the state 1340 according to rotation of the electronic device 300. The user interface 1300 in a portrait mode may be displayed within the fourth display area 364. For example, the user interface 1300 may include the preview image 1302 obtained via the third camera 343.

Although not illustrated, according to an embodiment, in the state 1330 and/or the state 1340, the interface 1300 may further include text for guiding a use of the second camera 342, such as "You may obtain a better quality selfie image when capturing by using a rear camera".

Referring to FIG. 13B, an orientation of the electronic device 300 may correspond to a third orientation. While the orientation of the electronic device 300 corresponds to the third orientation, the application (e.g., the camera application) for obtaining the image related to the external environment may be executed.

In a state 1350, the electronic device 300 may be in the second state. While the electronic device 300 is in the second state, the application (e.g., the camera application) for obtaining the image related to the external environment may be executed. While the electronic device 300 is in the second state, the processor 310 may display the user interface 1300 for the application in the first display area 361. The user interface 1300 may include the preview image 1301 obtained via the first camera 341.

According to an embodiment, the processor 310 may rotate the first housing part 301 relative to the second housing part 302 and the third housing part 303. The state of the electronic device 300 may be changed from the state 1350 to a state 1360, according to the rotation of the first housing part 301.

According to an embodiment, the processor 310 may rotate the second housing part 302 and the third housing part 303 relative to the first housing part 301. The state of the electronic device 300 may be changed from the state 1350 to a state 1370 according to the rotation of the second housing part 302 and the third housing part 303.

In the state 1360, the second surface (e.g., a rear surface) of the first housing part 301 may face the user. The second camera 342 may face the user.

For example, the processor 310 may cease execution of the application (e.g., the camera application) based on identifying that the second camera 342 faces the user. For example, the processor 310 may cease the execution of the application (e.g., the camera application) based on identifying that the second surface (e.g., the rear surface) of the first housing part 301 faces the user. For example, the processor 310 may cease the execution of the application (e.g., the camera application) based on identifying that the first housing part 301 is rotated relative to the second housing part 302 and the third housing part 303.

In the state 1370, the second surface (e.g., the rear surface) of the second housing part 302 may face the user. The cover display 332 may face the user. The third camera 343 may face the user.

For example, the processor 310 may display the user interface 1300 within the fourth display area 364 of the cover display 332 based on identifying that the third camera 343 faces the user. For example, the user interface 1300 may be displayed within the fourth display area 364 of the cover display 332 based on identifying that the third camera 343 faces the user. The user interface 1300 may include the preview image 1302 obtained via the third camera 343.

For example, the processor 310 may display the user interface 1300 within the fourth display area 364 of the cover display 332 based on identifying that the second housing part 302 and the third housing part 303 are rotated relative to the first housing part 301. For example, the user interface 1300 in the portrait mode may be displayed within the fourth display area 364 based on an orientation of the electronic device 300 according to the state 1370.

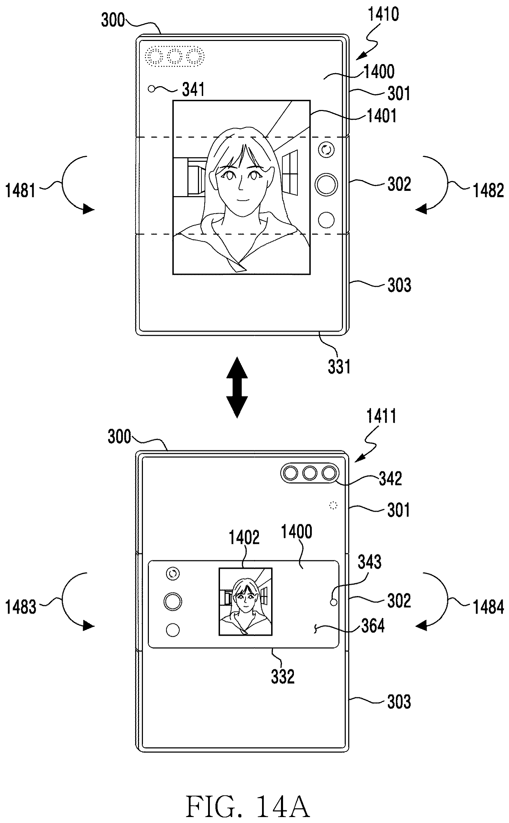

FIG. 14A illustrates an example of an operation of an electronic device according to an embodiment.

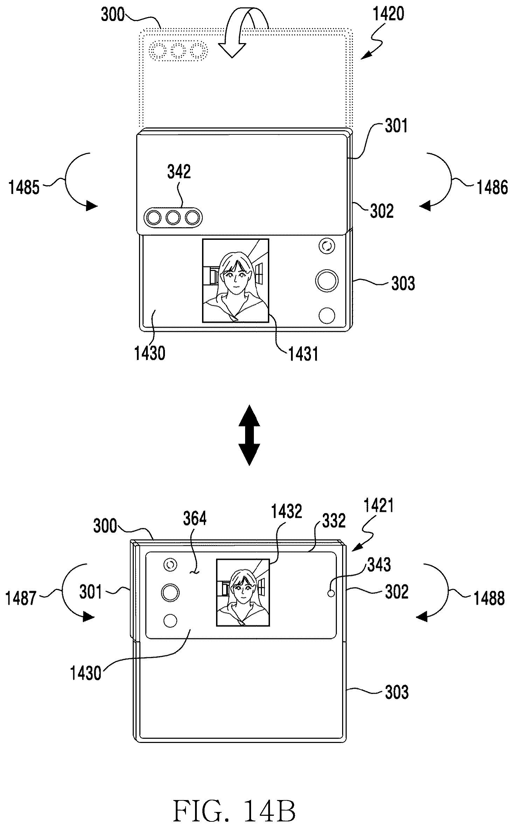

FIG. 14B illustrates an example of an operation of an electronic device according to an embodiment.

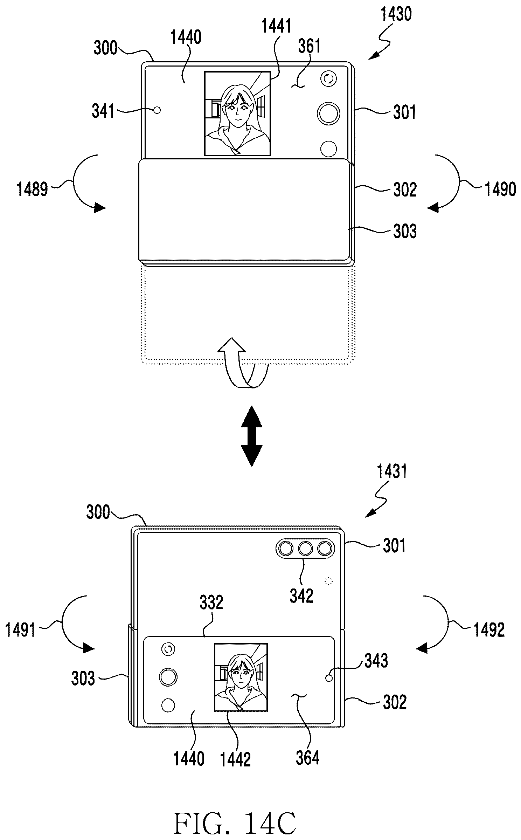

FIG. 14C illustrates an example of an operation of an electronic device according to an embodiment.

Referring to FIG. 14A, an orientation of an electronic device 300 may correspond to a first orientation. While the orientation of the electronic device 300 corresponds to the first orientation, an application (e.g., a camera application) for obtaining an image related to an external environment may be executed.

In a state 1410 and a state 1411, the electronic device 300 may be in a first state. While the electronic device 300 is in the first state, the application (e.g., the camera application) for obtaining the image related to the external environment may be executed.

In the state 1410, while the electronic device 300 is in the first state, a processor 310 may display a user interface 1400 for the application within a first display area 361, a second display area 362, and a third display area 363. The user interface 1400 may include a preview image 1401 obtained via a first camera 341. For example, the preview image 1401 related to a user of the electronic device 300 may be obtained via the first camera 341.

According to an embodiment, a state of the electronic device 300 may be changed from the state 1410 to the state 1411 based on rotation of the electronic device 300 according to one of a direction 1481 and a direction 1482. The processor 310 may identify that the electronic device 300 rotates according to one of the direction 1481 and the direction 1482 via a sensor 350.

In the state 1411, the processor 310 may display a preview image 1402 obtained via a second camera 342 on a fourth display area 364 of a cover display 332 based on identifying that the electronic device 300 rotates according to one of the direction 1481 and the direction 1482 via the sensor 350. For example, the processor 310 may change a camera to display the preview image from the first camera 341 to the second camera 342 based on identifying that the electronic device 300 rotates according to one of the direction 1481 and the direction 1482 via the sensor 350. For example, the processor 310 may change a display area to display the preview image from a display area including the first display area 361, the second display area 362, and the third display area 363 to the fourth display area 364 based on identifying that the electronic device 300 rotates according to one of the direction 1481 and the direction 1482 via the sensor 350.

According to an embodiment, the processor 310 may change the camera to display (e.g. to obtain) the preview image from the first camera 341 to the second camera 342 based on identifying that the user is positioned in a field of view of the second camera 342. The processor 310 may change the display area to display the preview image from the display area including the first display area 361, the second display area 362, and the third display area 363 to the fourth display area 364 based on identifying that the user is positioned in the field of view of the second camera 342.

According to an embodiment, the processor 310 may display a preview image obtained via a third camera 343 on the fourth display area 364 of the cover display 332 based on identifying that the electronic device 300 rotates according to one of the direction 1481 and the direction 1482.

According to an embodiment, the state of the electronic device 300 may be changed from the state 1411 to the state 1410 based on rotation of the electronic device 300 according to one of a direction 1483 and a direction 1484. The processor 310 may identify that the electronic device 300 rotates according to one of the direction 1483 and the direction 1484 via the sensor 350. The processor 310 may perform an operation of the electronic device 300 according to the state 1410 based on identifying that the electronic device 300 rotates according to one of the direction 1483 and the direction 1484 via the sensor 350.

Referring to FIG. 14B, the orientation of the electronic device 300 may correspond to the first orientation. While the orientation of the electronic device 300 corresponds to the first orientation, the application (e.g., the camera application) for obtaining the image related to the external environment may be executed.

In a state 1420 and a state 1421, the electronic device 300 may be in a fourth state. While the electronic device 300 is in the fourth state, the application (e.g., the camera application) for obtaining the image related to the external environment may be executed.

In the state 1420, while the electronic device 300 is in the fourth state, the processor 310 may display a user interface 1430 for the application within the third display area 363. The user interface 1430 may include a preview image 1431 obtained via the second camera 342. For example, the preview image 1431 related to the user of the electronic device 300 may be obtained via the second camera 342.

According to an embodiment, the state of the electronic device 300 may be changed from the state 1420 to the state 1421 based on rotation of the electronic device 300 according to one of a direction 1485 and a direction 1486. The processor 310 may identify that the electronic device 300 rotates according to one of the direction 1485 and the direction 1486 via the sensor 350.

In the state 1421, the processor 310 may display a preview image 1432 obtained via the third camera 343 on the fourth display area 364 of the cover display 332 based on identifying that the electronic device 300 rotates according to one of the direction 1485 and the direction 1486 via the sensor 350. For example, the processor 310 may change a camera to display the preview image from the second camera 342 to the third camera 343 based on identifying the electronic device 300 rotates according to one of the direction 1485 and the direction 1486 via the sensor 350. For example, the processor 310 may change a display area to display the preview image from the third display area 363 to the fourth display area 364 based on identifying that the electronic device 300 rotates according to one of the direction 1485 and the direction 1486 via the sensor 350.

According to an embodiment, the processor 310 may change the camera to display (e.g. to obtain, or provide) the preview image from the second camera 342 to the third camera 343 based on identifying that the user is positioned in a field of view of the third camera 343. The processor 310 may change the display area to display the preview image from the third display area 363 to the fourth display area 364 based on identifying that the user is positioned in the field of view of the third camera 343.

According to an embodiment, the state of the electronic device 300 may be changed from the state 1421 to the state 1420 based on rotation of the electronic device 300 according to one of a direction 1487 and a direction 1488. The processor 310 may identify that the electronic device 300 rotates according to one of the direction 1487 and the direction 1488 via the sensor 350. The processor 310 may perform an operation of the electronic device 300 according to the state 1420 based on identifying that the electronic device 300 rotates according to one of the direction 1487 and the direction 1488 via the sensor 350.

Referring to FIG. 14C, the orientation of the electronic device 300 may correspond to the first orientation. While the orientation of the electronic device 300 corresponds to the first orientation, the application (e.g., the camera application) for obtaining the image related to the external environment may be executed.

In a state 1430 and a state 1431, the electronic device 300 may be in a second state. While the electronic device 300 is in the second state, the application (e.g., the camera application) for obtaining the image related to the external environment may be executed.

In the state 1430, while the electronic device 300 is in the second state, the processor 310 may display a user interface 1440 for the application within the first display area 361. The user interface 1440 may include a preview image 1441 obtained via the first camera 341. For example, the preview image 1441 related to the user of the electronic device 300 may be obtained via the first camera 341.

According to an embodiment, the state of the electronic device 300 may be changed from the state 1430 to the state 1431 based on rotation of the electronic device 300 according to one of a direction 1489 and a direction 1490. The processor 310 may identify that the electronic device 300 rotates according to one of the direction 1489 and the direction 1490 via the sensor 350.

In the state 1431, the processor 310 may display the preview image 1442 obtained via the third camera 343 on the fourth display area 364 of the cover display 332 based on identifying that the electronic device 300 rotates according to one of the direction 1489 and the direction 1490 via the sensor 350. For example, the processor 310 may change a camera to display the preview image from the first camera 341 to the second camera 342 based on identifying that the electronic device 300 rotates according to one of the direction 1489 and the direction 1490 via the sensor 350. For example, the processor 310 may change a display area to display the preview image from the first display area 361 to the fourth display area 364 based on identifying that the electronic device 300 rotates according to one of the direction 1489 and the direction 1490 via the sensor 350.

According to an embodiment, the processor 310 may change the camera to display the preview image from the first camera 341 to the second camera 342 based on identifying that the user is positioned in the field of view of the second camera 342. The processor 310 may change the display area to display the preview image from the first display area 361 to the fourth display area 364, based on identifying that the user is positioned in the field of view of the second camera 342.

According to an embodiment, the processor 310 may display the preview image obtained via the third camera 343 on the fourth display area 364 of the cover display 332 based on identifying that the electronic device 300 rotates according to one of the direction 1489 and the direction 1490.

According to an embodiment, the state of the electronic device 300 may be changed from the state 1431 to the state 1430 based on the rotation of the electronic device 300 according to one of the direction 1489 and the direction 1490. The processor 310 may identify that the electronic device 300 rotates according to one of a direction 1491 and a direction 1492 via the sensor 350. The processor 310 may perform an operation of the electronic device 300 according to the state 1430 based on identifying that the electronic device 300 rotates according to one of the direction 1491 and the direction 1492 via the sensor 350.

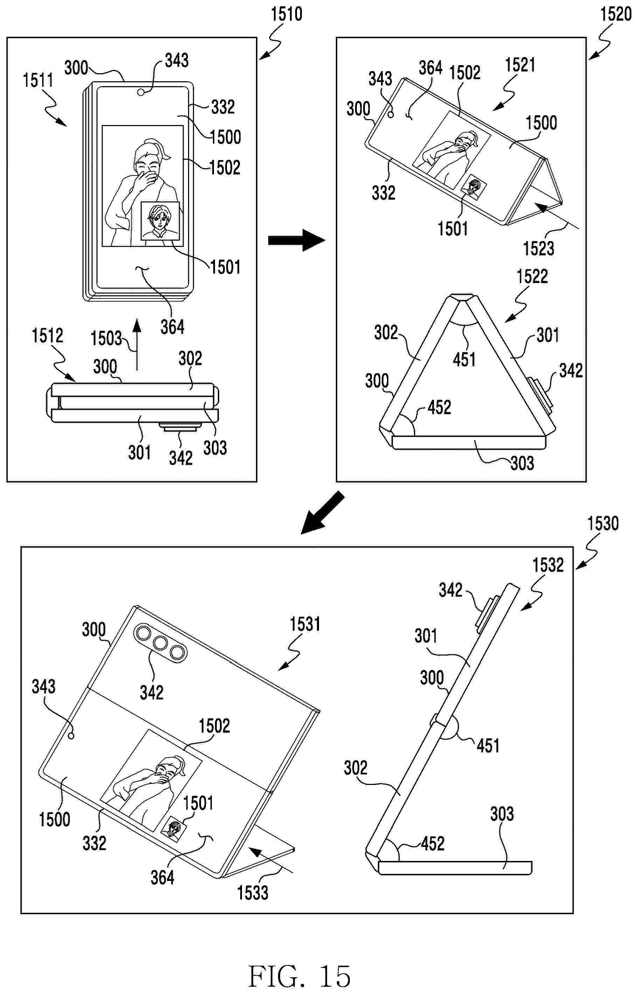

FIG. 15 illustrates an example of an operation of an electronic device according to an embodiment.

Referring to FIG. 15, an electronic device 300 may execute an application (e.g., a video call application) for a video call with a user of an external electronic device.

In a state 1510, the electronic device 300 may be in a third state. According to an example 1511, a processor 310 may display a user interface 1500 of the application for the video call within a fourth display area 364 of a cover display 332. The user interface 1500 may include an area 1501 for displaying a video related to a user of the electronic device 300 obtained via a third camera 343. The user interface 1500 may include an area 1502 for displaying a video related to another user received from the external electronic device.

An example 1512 may be an example in which the electronic device 300 according to the example 1511 is viewed from a direction 1503. According to the example 1512, a second surface (e.g., a rear surface) of a second housing part 302 may be exposed to the outside. A second surface (e.g., a rear surface) of a first housing part 301 may be exposed to the outside. The processor 310 may display the user interface 1500 via the fourth display area 364 of the cover display 332 corresponding to the second surface of the second housing part 302.

In a state 1520, an example 1522 may be an example in which the electronic device 300 according to an example 1521 is viewed from a direction 1523 (e.g. a side direction). A triangular prism may be formed according to a position relationship of the first housing part 301, the second housing part 302, and a third housing part 303. For example, a first angle 451 may be within a range corresponding to a specified angle (e.g., 60 degrees). A second angle 452 may be within the range corresponding to the specified angle (e.g., 60 degrees).

For example, the processor 310 may display the user interface 1500 on the fourth display area 364 of the cover display 332. The user interface 1500 may include the area 1501 for displaying the video related to the user of the electronic device 300 obtained via the third camera 343. The user interface 1500 may include the area 1502 for displaying the video related to the other user received from the external electronic device.

In a state 1530, an example 1532 may be an example in which the electronic device 300 according to an example 1531 is viewed from a direction 1533. The first angle 451 between a first surface (e.g., a front surface) of the first housing part 301 and a first surface (e.g., a front surface) of the second housing part 302 may be greater than a first reference angle. The second angle 452 between the first surface of the second housing part 302 and a first surface of the third housing part 303 may be within the range corresponding to the specified angle (e.g., 60 degrees).

For example, the processor 310 may display the user interface 1500 on the fourth display area 364 of the cover display 332. The user interface 1500 may include the area 1501 for displaying the video related to the user of the electronic device 300 obtained via a second camera 342. The user interface 1500 may include the area 1502 for displaying the video related to the other user received from the external electronic device.

According to an embodiment, the processor 310 may change a camera for obtaining the video related to the user from the third camera 343 to the second camera 342 based on identifying that the first angle 451 is greater than the first reference angle. The processor 310 may display the video related to the user obtained via the second camera 342 in the area 1501 of the user interface 1500.

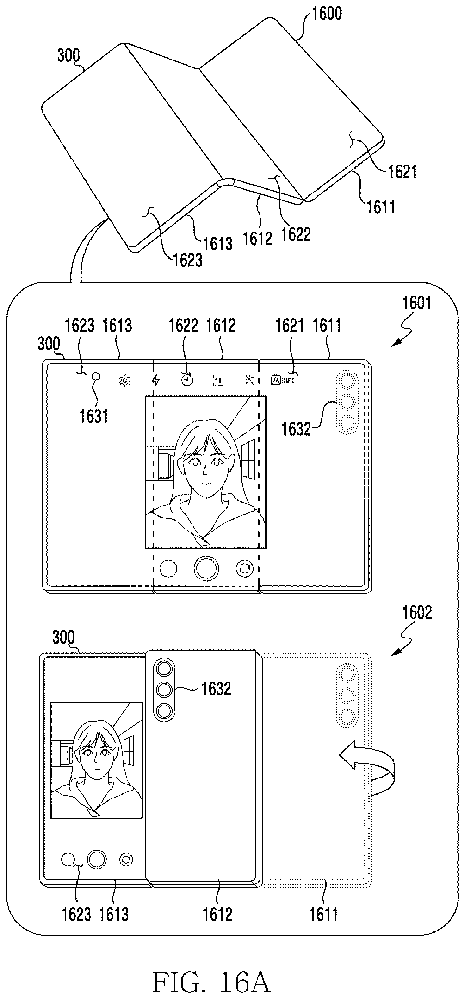

FIG. 16A illustrates an example of an operation of an electronic device according to an embodiment.

Referring to FIG. 16A, an electronic device 1600 may have a structure different from the electronic device 300 of FIG. 3. The electronic device 1600 may include a first housing part 1611, a second housing part 1612, and a third housing part 1613. A flexible display 331 may include a first display area 1621 on a first surface (e.g., a front surface) of the first housing part 1611, a second display area 1622 on a first surface (e.g., a front surface) of the second housing part 1612, and a third display area 1623 on a first surface (e.g., a front surface) of the third housing part 1613. For example, a first camera 1631 may be disposed toward a direction in which the third display area 1623 faces. A second camera 1632 may be disposed toward a direction opposite to the direction in which the first display area 1621 faces.

According to an embodiment, the first housing part 1611 and the second housing part 1612 may be folded so that the first display area 1621 and the second display area 1622 face each other. The second housing part 1612 and the third housing part 1613 may be folded so that the second display area 1622 and the third display area 1623 are spaced apart from each other.

In an example 1601, a user interface of an application for obtaining an image related to an external environment may be displayed within the first display area 1621, the second display area 1622, and the third display area 1623.

In an example 1602, as the first housing part 1611 is folded relative to the second housing part 1612, the third display area 1623 may be exposed. The user interface of the application for obtaining the image related to the external environment may be displayed within the third display area 1623. As the first housing part 1611 is folded relative to the second housing part 1612, a camera to display a preview image may be changed. As the first housing part 1611 is folded relative to the second housing part 1612, the camera to display the preview image may be changed from the first camera 1631 to the second camera 1632. The processor 310 may display a preview image obtained from the second camera 1632 on the user interface.

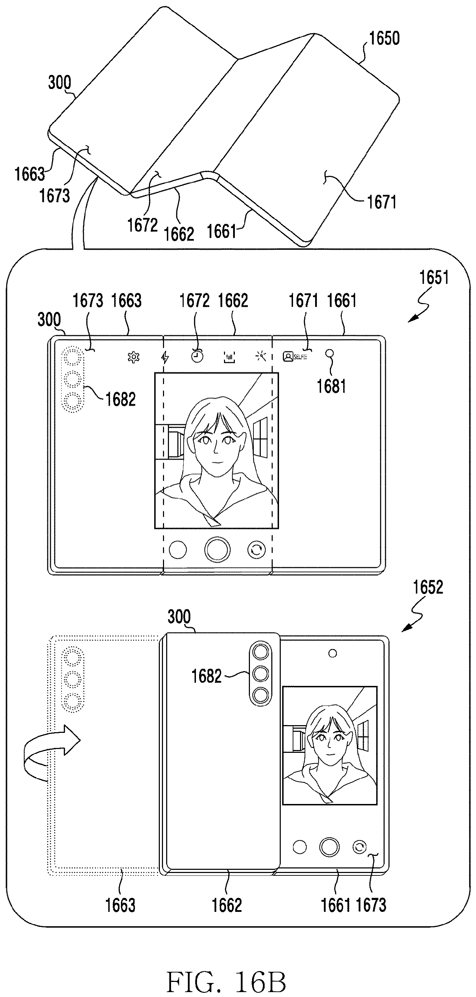

FIG. 16B illustrates an example of an operation of an electronic device according to an embodiment.

Referring to FIG. 16B, an electronic device 1650 may have a structure different from the electronic device 300 of FIG. 3. The electronic device 1650 may include a first housing part 1661, a second housing part 1662, and a third housing part 1663. The flexible display 331 may include a first display area 1671 on a first surface (e.g., a front surface) of the first housing part 1661, a second display area 1672 on a first surface (e.g., a front surface) of the second housing part 1662, and a third display area 1673 on a first surface (e.g., a front surface) of the third housing part 1663. For example, a first camera 1681 may be disposed toward a direction in which the first display area 1671 faces. A second camera 1682 may be disposed toward a direction opposite to the direction in which the third display area 1673 faces.

According to an embodiment, the first housing part 1661 and the second housing part 1662 may be folded so that the first display area 1671 and the second display area 1672 are spaced apart from each other. The second housing part 1662 and the third housing part 1663 may be folded so that the second display area 1672 and the third display area 1673 face each other.

In an example 1651, a user interface of an application for obtaining an image related to an external environment may be displayed within the first display area 1671, the second display area 1672, and the third display area 1673.

In the example 1652, as the third housing part 1663 is folded relative to the second housing part 1662, the first display area 1671 may be exposed. The user interface of the application for obtaining the image related to the external environment may be displayed within the first display area 1671. As the third housing part 1663 is folded relative to the second housing part 1662, a camera to display a preview image may be changed. As the third housing part 1663 is folded relative to the second housing part 1662, the camera to display the preview image may be changed from the first camera 1681 to the second camera 1682. The processor 310 may display a preview image obtained from the second camera 1682 on the user interface.

FIG. 17 is a block diagram of an electronic device in a network environment according to an embodiment.

Referring to FIG. 17, the electronic device 1701 in the network environment 1700 may communicate with an electronic device 1702 via a first network 1798 (e.g., a short-range wireless communication network), or at least one of an electronic device 1704 or a server 1708 via a second network 1799 (e.g., a long-range wireless communication network). According to an embodiment, the electronic device 1701 may communicate with the electronic device 1704 via the server 1708. According to an embodiment, the electronic device 1701 may include a processor 1720, memory 1730, an input module 1750, a sound output module 1755, a display module 1760, an audio module 1770, a sensor module 1776, an interface 1777, a connecting terminal 1778, a haptic module 1779, a camera module 1780, a power management module 1788, a battery 1789, a communication module 1790, a subscriber identification module(SIM) 1796, or an antenna module 1797. In some embodiments, at least one of the components (e.g., the connecting terminal 1778) may be omitted from the electronic device 1701, or one or more other components may be added in the electronic device 1701. In some embodiments, some of the components (e.g., the sensor module 1776, the camera module 1780, or the antenna module 1797) may be implemented as a single component (e.g., the display module 1760).

The processor 1720 may execute, for example, software (e.g., a program 1740) to control at least one other component (e.g., a hardware or software component) of the electronic device 1701 coupled with the processor 1720, and may perform various data processing or computation. According to an embodiment, as at least part of the data processing or computation, the processor 1720 may store a command or data received from another component (e.g., the sensor module 1776 or the communication module 1790) in volatile memory 1732, process the command or the data stored in the volatile memory 1732, and store resulting data in non-volatile memory 1734. According to an embodiment, the processor 1720 may include a main processor 1721 (e.g., a central processing unit (CPU) or an application processor (AP)), or an auxiliary processor 1723 (e.g., a graphics processing unit (GPU), a neural processing unit (NPU), an image signal processor (ISP), a sensor hub processor, or a communication processor (CP)) that is operable independently from, or in conjunction with, the main processor 1721. For example, when the electronic device 1701 includes the main processor 1721 and the auxiliary processor 1723, the auxiliary processor 1723 may be adapted to consume less power than the main processor 1721, or to be specific to a specified function. The auxiliary processor 1723 may be implemented as separate from, or as part of the main processor 1721.

The auxiliary processor 1723 may control at least some of functions or states related to at least one component (e.g., the display module 1760, the sensor module 1776, or the communication module 1790) among the components of the electronic device 1701, instead of the main processor 1721 while the main processor 1721 is in an inactive (e.g., sleep) state, or together with the main processor 1721 while the main processor 1721 is in an active state (e.g., executing an application). According to an embodiment, the auxiliary processor 1723 (e.g., an image signal processor or a communication processor) may be implemented as part of another component (e.g., the camera module 1780 or the communication module 1790) functionally related to the auxiliary processor 1723. According to an embodiment, the auxiliary processor 1723 (e.g., the neural processing unit) may include a hardware structure specified for artificial intelligence model processing. An artificial intelligence model may be generated by machine learning. Such learning may be performed, e.g., by the electronic device 1701 where the artificial intelligence is performed or via a separate server (e.g., the server 1708). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1730 may store various data used by at least one component (e.g., the processor 1720 or the sensor module 1776) of the electronic device 1701. The various data may include, for example, software (e.g., the program 1740) and input data or output data for a command related thereto. The memory 1730 may include the volatile memory 1732 or the non-volatile memory 1734.

The program 1740 may be stored in the memory 1730 as software, and may include, for example, an operating system (OS) 1742, middleware 1744, or an application 1746.

The input module 1750 may receive a command or data to be used by another component (e.g., the processor 1720) of the electronic device 1701, from the outside (e.g., a user) of the electronic device 1701. The input module 1750 may include, for example, a microphone, a mouse, a keyboard, a key (e.g., a button), or a digital pen (e.g., a stylus pen).

The sound output module 1755 may output sound signals to the outside of the electronic device 1701. The sound output module 1755 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1760 may visually provide information to the outside (e.g., a user) of the electronic device 1701. The display module 1760 may include, for example, a display, a hologram device, or a projector and control circuitry to control a corresponding one of the display, hologram device, and projector. According to an embodiment, the display module 1760 may include a touch sensor adapted to detect a touch, or a pressure sensor adapted to measure the intensity of force incurred by the touch.

The audio module 1770 may convert a sound into an electrical signal and vice versa. According to an embodiment, the audio module 1770 may obtain the sound via the input module 1750, or output the sound via the sound output module 1755 or a headphone of an external electronic device (e.g., an electronic device 1702) directly (e.g., wiredly) or wirelessly coupled with the electronic device 1701.

The sensor module 1776 may detect an operational state (e.g., power or temperature) of the electronic device 1701 or an environmental state (e.g., a state of a user) external to the electronic device 1701, and then generate an electrical signal or data value corresponding to the detected state. According to an embodiment, the sensor module 1776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1777 may support one or more specified protocols to be used for the electronic device 1701 to be coupled with the external electronic device (e.g., the electronic device 1702) directly (e.g., wiredly) or wirelessly. According to an embodiment, the interface 1777 may include, for example, a high definition multimedia interface (HDMI), a universal serial bus (USB) interface, a secure digital (SD) card interface, or an audio interface.

A connecting terminal 1778 may include a connector via which the electronic device 1701 may be physically connected with the external electronic device (e.g., the electronic device 1702). According to an embodiment, the connecting terminal 1778 may include, for example, an HDMI connector, a USB connector, a SD card connector, or an audio connector (e.g., a headphone connector).

The haptic module 1779 may convert an electrical signal into a mechanical stimulus (e.g., a vibration or a movement) or electrical stimulus which may be recognized by a user via his tactile sensation or kinesthetic sensation. According to an embodiment, the haptic module 1779 may include, for example, a motor, a piezoelectric element, or an electric stimulator.

The camera module 1780 may capture a still image or moving images. According to an embodiment, the camera module 1780 may include one or more lenses, image sensors, image signal processors, or flashes.

The power management module 1788 may manage power supplied to the electronic device 1701. According to an embodiment, the power management module 1788 may be implemented as at least part of, for example, a power management integrated circuit (PMIC).

The battery 1789 may supply power to at least one component of the electronic device 1701. According to an embodiment, the battery 1789 may include, for example, a primary cell which is not rechargeable, a secondary cell which is rechargeable, or a fuel cell.

The communication module 1790 may support establishing a direct (e.g., wired) communication channel or a wireless communication channel between the electronic device 1701 and the external electronic device (e.g., the electronic device 1702, the electronic device 1704, or the server 1708) and performing communication via the established communication channel. The communication module 1790 may include one or more communication processors that are operable independently from the processor 1720 (e.g., the application processor (AP)) and supports a direct (e.g., wired) communication or a wireless communication. According to an embodiment, the communication module 1790 may include a wireless communication module 1792 (e.g., a cellular communication module, a short-range wireless communication module, or a global navigation satellite system (GNSS) communication module) or a wired communication module 1794 (e.g., a local area network (LAN) communication module or a power line communication (PLC) module). A corresponding one of these communication modules may communicate with the external electronic device via the first network 1798 (e.g., a short-range communication network, such as Bluetooth^{™}, wireless-fidelity (Wi-Fi) direct, or infrared data association (IrDA)) or the second network 1799 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1792 may identify and authenticate the electronic device 1701 in a communication network, such as the first network 1798 or the second network 1799, using subscriber information (e.g., international mobile subscriber identity (IMSI)) stored in the subscriber identification module 1796.

The wireless communication module 1792 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1792 may support a high-frequency band (e.g., the mmWave band) to achieve, e.g., a high data transmission rate. The wireless communication module 1792 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1792 may support various requirements specified in the electronic device 1701, an external electronic device (e.g., the electronic device 1704), or a network system (e.g., the second network 1799). According to an embodiment, the wireless communication module 1792 may support a peak data rate (e.g., 20Gbps or more) for implementing eMBB, loss coverage (e.g., 1764dB or less) for implementing mMTC, or U-plane latency (e.g., 0.5ms or less for each of downlink (DL) and uplink (UL), or a round trip of 17ms or less) for implementing URLLC.

The antenna module 1797 may transmit or receive a signal or power to or from the outside (e.g., the external electronic device) of the electronic device 1701. According to an embodiment, the antenna module 1797 may include an antenna including a radiating element composed of a conductive material or a conductive pattern formed in or on a substrate (e.g., a printed circuit board (PCB)). According to an embodiment, the antenna module 1797 may include a plurality of antennas (e.g., array antennas). In such a case, at least one antenna appropriate for a communication scheme used in the communication network, such as the first network 1798 or the second network 1799, may be selected, for example, by the communication module 1790 (e.g., the wireless communication module 1792) from the plurality of antennas. The signal or the power may then be transmitted or received between the communication module 1790 and the external electronic device via the selected at least one antenna. According to an embodiment, another component (e.g., a radio frequency integrated circuit (RFIC)) other than the radiating element may be additionally formed as part of the antenna module 1797.

According to various embodiments, the antenna module 1797 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1701 and the external electronic device 1704 via the server 1708 coupled with the second network 1799. Each of the electronic devices 1702 or 1704 may be a device of a same type as, or a different type, from the electronic device 1701. According to an embodiment, all or some of operations to be executed at the electronic device 1701 may be executed at one or more of the external electronic devices 1702, 1704, or 1708. For example, if the electronic device 1701 should perform a function or a service automatically, or in response to a request from a user or another device, the electronic device 1701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1701. The electronic device 1701 may provide the outcome, with or without further processing of the outcome, as at least part of a reply to the request. To that end, a cloud computing, distributed computing, mobile edge computing (MEC), or client-server computing technology may be used, for example. The electronic device 1701 may provide ultra low-latency services using, e.g., distributed computing or mobile edge computing. In another embodiment, the external electronic device 1704 may include an internet-of-things (IoT) device. The server 1708 may be an intelligent server using machine learning and/or a neural network. According to an embodiment, the external electronic device 1704 or the server 1708 may be included in the second network 1799. The electronic device 1701 may be applied to intelligent services (e.g., smart home, smart city, smart car, or healthcare) based on 5G communication technology or IoT-related technology.

According to an embodiment, an electronic device may comprise a first housing part, a second housing part rotatably coupled with the first housing part, a third housing part rotatably coupled with the second housing part, a flexible display including a first display area corresponding to a first surface of the first housing part, a second display area corresponding to a first surface of the second housing part, and a third display area corresponding to a first surface of the third housing part, a first camera disposed on the first surface of the first housing part, a second camera disposed on a second surface opposite to the first surface of the first housing part, one or more sensors, memory, including one or more storage mediums, storing instructions, and at least one processor comprising processing circuitry. The instructions, when executed by the at least one processor individually and/or collectively, may cause the electronic device to, while an application for obtaining an image related to an external environment is executed, based on a state of the electronic device according to a position (e.g. positional) relationship between the first housing part, the second housing part, and the third housing part, determine at least one of the first display area, the second display area, and the third display area as a display area to display a user interface for the application, determine one of the first camera and the second camera as a camera to display (e.g. to obtain, or provide a preview image) a preview image to be displayed in the user interface, determine, based on the determined display area and an orientation of the electronic device identified via the one or more sensors, a layout of the user interface for the application, and display, based on the determined layout, the user interface for the application, including a preview image obtained via the determined camera, in the determined display area.

For example, the positional relationship of the first housing part, the second housing part, and the third housing part may relate to an angular displacement (or angle) between the first housing part and second housing part, and to an angular displacement (or angle) the second housing part and the third housing part. That is, the positional relationship may relate to (or comprise) an angular displacement between these parts (e.g. when rotated about a respective hinge portion, as described with reference to Figures 1-3 and accompanying description therein). For example, a state of the device may be identified based on the positional relationship (or angular displacement) between the respective housing parts.

For example, the one or more sensors may be configured to detect a first angle between the first surface of the first housing part and the first surface of the second housing part and a second angle between the first surface of the second housing part and the first surface of the third housing part, and identify the orientation of the electronic device.

For example, the instructions, when executed by the at least one processor individually and/or collectively, may cause the electronic device to, identify that the electronic device is in a first state in which the first angle is greater than a first reference angle (e.g. about 178 degrees) and the second angle is greater than the first reference angle, based on identifying that the electronic device is in the first state, determine the first display area, the second display area, and the third display area as a display area to display the user interface and determine the first camera as a camera to display a preview image.

For example, the instructions, when executed by the at least one processor individually and/or collectively, may cause the electronic device to, identify that the electronic device is in a second state in which the first angle is greater than the first reference angle and the second angle is less than the second reference angle (e.g. about 20 degrees), which is less than the first reference angle, based on identifying that the electronic device is in the second state, determine the first display area as a display area to display the user interface, determine the first camera as a camera to display a preview image, and display, within the first display area, a preview image obtained via the first camera, between an area where the first camera is disposed and a visual object (e.g. as provided on the first display area) for capturing the preview image.

For example, the instructions, when executed by the at least one processor individually and/or collectively, may cause the electronic device to, while the electronic device is in a first semi-folded state between the first state and the second state, based on identifying that the orientation of the electronic device corresponds to a first orientation in which a top of the user interface is displayed within the first display area in the first state (e.g. a first orientation in which the first display area is identified to be positioned at a top of the electronic device, for example, in respect of the ground, and/or such as when viewed by a user), display, within the first display area and the second display area, the user interface including the preview image obtained via the first camera, and display, within the third display area, a reference color.

For example, the instructions, when executed by the at least one processor individually and/or collectively, may cause the electronic device to, while the electronic device is in the first semi-folded state between the first state and the second state (e.g. wherein the first semi-folded state is an intermediate state between the first state and the second state, and in which the first semi-folded state may be identified based on identifying that the first angle 451 is greater than the first reference angle and the second angle 452 is greater than or equal to the second reference angle and less than or equal to the first reference angle), based on identifying that the orientation of the electronic device corresponds to a second orientation in which a top of the user interface is displayed within the third display area in the first state (e.g. a second orientation in which the third display area is identified to be positioned at a top of the electronic device, e.g. when viewed by the user), display, within the first display area and the second display area, a control area including a visual object for capturing the preview image obtained via the first camera included in the user interface, and display, within the third display area, the preview image obtained via the first camera.

For example, the electronic device may comprise a cover display including a fourth display area corresponding to a second surface opposite to the first surface of the second housing part, and a third camera disposed on the second surface of the second housing part. The instructions, when executed by the at least one processor individually and/or collectively, may cause the electronic device to, identify that the electronic device is in a third state in which the first angle is less than a second reference angle which is less than the first reference angle and the second angle is less than the second reference angle, based on identifying that the electronic device is in the third state, determine the fourth display area as a display area to display the user interface, and display, within the fourth display area, the user interface including a preview image obtained via the third camera.

For example, the instructions, when executed by the at least one processor individually and/or collectively, may cause the electronic device to, identify that the electronic device is in a fourth state in which the first angle is less than a second reference angle which is less than the first reference angle and the second angle is greater than the first reference angle, based on identifying that the electronic device is in the fourth state, determine the third display area as a display area to display the user interface, and determine the second camera as a camera to display a preview image.

For example, the instructions, when executed by the at least one processor individually and/or collectively, may cause the electronic device to, while the electronic device is in a second semi-folded state between the first state and the fourth state (e.g. wherein the second semi-folded state is an intermediate state between the first state and the second state, and the second semi-folded state is identified based on identifying that the first angle 451 is greater than or equal to the second reference angle (e.g., 20 degrees) and less than or equal to the first reference angle, and the second angle 452 is greater than the first reference angle (e.g., 178 degrees)), based on identifying that the orientation of the electronic device corresponds to a first orientation in which a top of the user interface is displayed within the first display area in the first state, display, within the first display area, a preview image obtained via the first camera, and display, within the second display area and the third display area, a control area including a visual object for capturing the preview image obtained via the first camera, included in the user interface.

For example, the instructions, when executed by the at least one processor individually and/or collectively, may cause the electronic device to, while the electronic device is in the second semi-folded state between the first state and the fourth state, based on identifying that the orientation of the electronic device corresponds to a second orientation in which a top of the user interface is displayed within the third display area in the first state, display, within the second display area and the third display area, the user interface.

For example, the instructions, when executed by the at least one processor individually and/or collectively, may cause the electronic device to, based on identifying an input for a visual object for setting a self-photography mode included in the user interface, display, within the first display area, the second display area, and the third display area, a screen for guiding to rotate the first housing part relative to the second housing part.

For example, the instructions, when executed by the at least one processor individually and/or collectively, may cause the electronic device to, in response to identifying that the state of the electronic device changes from a second state in which the first angle is greater than a first reference angle and the second angle is less than a second reference angle which is less than the first reference angle to a third state in which the first angle is less than a second reference angle which is less than the first reference angle and the second angle is less than the second reference angle, based on identifying that the second camera is facing a user, cease execution of the application.

For example, the electronic device may comprise a cover display including a fourth display area corresponding to a second surface opposite to the first surface of the second housing part, and a third camera disposed on the second surface of the second housing part. The instructions, when executed by the at least one processor individually and/or collectively, may cause the electronic device to, in response to identifying that the state of the electronic device is changed from the second state to the third state, display the user interface including a preview image obtained via the third camera based on identifying that the third camera is facing the user.

For example, the electronic device may comprise a cover display including a fourth display area corresponding to a second surface opposite to the first surface of the second housing part, and a third camera disposed on the second surface of the second housing part. The instructions, when executed by the at least one processor individually and/or collectively, may cause the electronic device to, identify that the electronic device is in a second state in which the first angle is greater than a first reference angle and the second angle is less than a second reference angle which is less than the first reference angle, while the electronic device is in the second state, based on identifying that the first camera is facing a user of the electronic device, display, within the first display area, the user interface including a preview image obtained via the first camera, and based on identifying that the second camera is facing a user of the electronic device, display, within the fourth display area, the user interface including a preview image obtained via the second camera.

For example, the electronic device may comprise a cover display including a fourth display area corresponding to a second surface opposite to the first surface of the second housing part, and a third camera disposed on the second surface of the second housing part. The instructions, when executed by the at least one processor individually and/or collectively, may cause the electronic device to identify that the electronic device is in a fourth state in which the first angle is less than a second reference angel which is less than the first reference angle and the second angle is greater than the first reference angle, while the electronic device is in the fourth state, based on identifying that the second camera is facing a user of the electronic device, display, within the third display area, the user interface including a preview image obtained via the second camera, and based on identifying that the third camera is facing a user of the electronic device, display, within the fourth display area, the user interface including a preview image obtained via the second camera.

According to an embodiment, an electronic device may comprise a first housing part, a second housing part rotatably coupled with the first housing part, a third housing part rotatably coupled with the second housing part, a flexible display including a first display area corresponding to a first surface of the first housing part, a second display area corresponding to a first surface of the second housing part, and a third display area corresponding to a first surface of the third housing part, a first camera disposed on the first surface of the first housing part, a second camera disposed on a second surface opposite to the first surface of the first housing part, and one or more sensors. A method performed by the electronic device may comprise, while an application for obtaining an image related to an external environment is executed, based on a state of the electronic device according to a position relationship between the first housing part, the second housing part, and the third housing part, determining at least one of the first display area, the second display area, and the third display area as a display area to display a user interface for the application, determining one of the first camera and the second camera as a camera to display a preview image to be displayed in the user interface, determining, based on the determined display area and an orientation of the electronic device identified via the one or more sensors, a layout of the user interface for the application, and displaying, based on the determined layout, the user interface for the application, including a preview image obtained via the determined camera, in the determined display area.

For example, the method may comprise identifying that the electronic device is in a first state in which a first angle between the first surface of the first housing part and the first surface of the second housing part is greater than a first reference angle and a second angle between the first surface of the second housing part and the first surface of the third housing part is greater than the first reference angle, based on identifying that the electronic device is in the first state, determining the first display area, the second display area, and the third display area as a display area to display the user interface, and determining the first camera as a camera to display a preview image.

For example, the method may comprise identifying that the electronic device is in a second state in which the first angle is greater than a first reference angle and the second angle is less than a second reference angle, which is less than the first reference angle, based on identifying that the electronic device is in the second state, determining the first display area, the second display area, and the third display area as a display area to display the user interface, determining the first camera as a camera to display a preview image, and displaying, within the first display area, a preview image obtained via the first camera, between an area where the first camera is disposed and a visual object for capturing the preview image.

For example, the method may comprise, in response to identifying that the state of the electronic device changes from a second state in which the first angle is greater than a first reference angle and the second angle is less than a second reference angle which is less than the first reference angle to a third state in which the first angle is less than a second reference angle which is less than the first reference angle and the second angle is less than the second reference angle, based on identifying that the second camera is facing a user, ceasing execution of the application.

According to an embodiment, a non-transitory computer readable storage medium may store one or more programs. The one or more programs may comprise instructions, when executed by at least one processor of an electronic device comprising a first housing part, a second housing part rotatably coupled with the first housing part, a third housing part rotatably coupled with the second housing part, a flexible display including a first display area corresponding to a first surface of the first housing part, a second display area corresponding to a first surface of the second housing part, and a third display area corresponding to a first surface of the third housing part, a first camera disposed on the first surface of the first housing part, a second camera disposed on a second surface opposite to the first surface of the first housing part, and one or more sensors, to cause the electronic device to, while an application for obtaining an image related to an external environment is executed using one of the first camera and the second camera, based on a state of the electronic device according to a position relationship of the first housing part, the second housing part, and the third housing part, determine at least one of the first display area, the second display area, and the third display area as a display area to display a user interface for the application, determine one of the first camera and the second camera as a camera to display a preview image to be displayed in the user interface, determine, based on the determined display area and an orientation of the electronic device identified via the one or more sensors, a layout of the user interface for the application, and display, based on the determined layout, the user interface for the application, including a preview image obtained via the determined camera, in the determined display area.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1740) including one or more instructions that are stored in a storage medium (e.g., internal memory 1736 or external memory 1738) that is readable by a machine (e.g., the electronic device 1701). For example, a processor (e.g., the processor 1720) of the machine (e.g., the electronic device 1701) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (300) comprising:
a first housing part (301);
a second housing part (302) rotatably coupled with the first housing part (301);
a third housing part (303) rotatably coupled with the second housing part (302);
a flexible display (331) including a first display area (361) corresponding to a first surface of the first housing part (301), a second display area (362) corresponding to a first surface of the second housing part (302), and a third display area (363) corresponding to a first surface of the third housing part (303),
a first camera (341) disposed on the first surface of the first housing part (301);
a second camera (342) disposed on a second surface opposite to the first surface of the first housing part (301);
one or more sensors (350);
memory (320) including storage media, storing instructions; and
at least one processor (310) including processing circuitry;
wherein the instructions, when executed by the at least one processor (310) individually and/or collectively, cause the electronic device (300) to:
while executing an application for obtaining an image related to an external environment, based on a state of the electronic device (300) according to a positional relationship between the first housing part (301), the second housing part (302), and the third housing part (303):
determine at least one of the first display area (361), the second display area (362), and the third display area (363) as a display area to display a user interface for the application, and
determine one of the first camera (341) and the second camera (342) as a camera to obtain a preview image to be displayed in the user interface,
determine, based on the determined display area and an orientation of the electronic device identified via the one or more sensors (350), a layout of the user interface for the application, and
display, based on the determined layout, the user interface for the application, including the preview image obtained via the determined camera, in the determined display area.

2. The electronic device of claim 1, wherein the one or more sensors (350) are configured to:
detect a first angle (451) between the first surface of the first housing part (301) and the first surface of the second housing part (302) and a second angle (452) between the first surface of the second housing part (302) and the first surface of the third housing part (303), and
identify the state based on the first angle (451) and second angle (452).

3. The electronic device of claim 2, wherein the instructions, when executed by the at least one processor (310) individually and/or collectively, cause the electronic device (300) to:
identify that the electronic device is in a first state in which the first angle (451) is greater than a first reference angle and the second angle (452) is greater than the first reference angle, and
based on identifying that the electronic device (300) is in the first state:
determine the first display area (361), the second display area (362), and the third display area (363) as a display area to display the user interface, and
determine the first camera (341) as a camera to display the preview image.

4. The electronic device (300) of claim 3, wherein the instructions, when executed by the at least one processor (310) individually and/or collectively, cause the electronic device (300) to:
identify that the electronic device (300) is in a second state in which the first angle (451) is greater than the first reference angle and the second angle (452) is less than the second reference angle, which is less than the first reference angle, and
based on identifying that the electronic device (300) is in the second state:
determine the first display area (361) as a display area to display the user interface, and
determine the first camera (341) as a camera to display the preview image, and
display, within the first display area (361) , the preview image obtained via the first camera, between an area where the first camera is disposed and a visual object provided on the first display area (361) for capturing the preview image.

5. The electronic device (300) of claim 4, wherein the instructions, when executed by the at least one processor (310) individually and/or collectively, cause the electronic device (300) to:
while the electronic device (300) is in a first semi-folded state between the first state and the second state, based on identifying that the orientation of the electronic device corresponds to a first orientation in which a top of the user interface is displayed within the first display area in the first state:
display, within the first display area (361) and the second display area (362), the user interface including the preview image obtained via the first camera (341), and
display, within the third display area (363), a reference color, and,

6. The electronic device (300) of claim 5, wherein the instructions, when executed by the at least one processor (310) individually and/or collectively, cause the electronic device (300) to:
while the electronic device (300) is in the first semi-folded state between the first state and the second state, based on identifying that the orientation of the electronic device (300) corresponds to a second orientation in which a top of the user interface is displayed within the third display area (363) in the first state:
display, within the first display area (361) and the second display area (362), a control area including a visual object for capturing the preview image obtained via the first camera (341) included in the user interface, and
display, within the third display area (363), the preview image obtained via the first camera (341).

7. The electronic device (300) of any of claims 3 to 6, wherein the electronic device comprises:
a cover display (332) including a fourth display area (364) corresponding to a second surface that is opposite to the first surface of the second housing part (302); and
a third camera (343) disposed on the second surface of the second housing part (302),
wherein the instructions, when executed by the at least one processor (310) individually and/or collectively, cause the electronic device (300) to:
identify that the electronic device (300) is in a third state in which the first angle (451) is less than a second reference angle which is less than the first reference angle and the second angle (452) is less than the second reference angle,
based on identifying that the electronic device (300) is in the third state, determine the fourth display area (364) as a display area to display the user interface, and
display, within the fourth display area (364), the user interface including the preview image obtained via the third camera (343).

8. The electronic device (300) of any of claims 3 to 7, wherein the instructions, when executed by the at least one processor (310) individually and/or collectively, cause the electronic device (300) to:
identify that the electronic device (300) is in a fourth state in which the first angle (451) is less than a second reference angle which is less than the first reference angle and the second angle (452) is greater than the first reference angle,
based on identifying that the electronic device (300) is in the fourth state:
determine the third display area (363) as a display area to display the user interface, and
determine the second camera (342) as a camera to obtain the preview image

9. The electronic device of claim 8, wherein the instructions, when executed by the at least one processor (310) individually and/or collectively, cause the electronic device (300) to:
while the electronic device (300) is in a second semi-folded state between the first state and the fourth state, based on identifying that the orientation of the electronic device (300) corresponds to a first orientation in which a top of the user interface is displayed within the first display area (361) in the first state:
display, within the first display area (361), a preview image obtained via the first camera, and
display, within the second display area (362) and the third display area (363), a control area including a visual object for capturing the preview image obtained via the first camera (341), in the user interface.

10. The electronic device of claim 9, wherein the instructions, when executed by the at least one processor (310) individually and/or collectively, cause the electronic device (300) to:
while the electronic device is in the second semi-folded state between the first state and the fourth state, based on identifying that the orientation of the electronic device corresponds to a second orientation in which a top of the user interface is displayed within the third display area in the first state:
display, within the second display area (362) and the third display area (363), the user interface.

11. The electronic device (300) of claim 3, wherein the instructions, when executed by the at least one processor (310) individually and/or collectively, cause the electronic device (300) to:
in response to identifying that the state of the electronic device (300) changes from a second state in which the first angle (451) is greater than a first reference angle and the second angle (452) is less than a second reference angle which is less than the first reference angle to a third state in which the first angle (451) is less than a second reference angle which is less than the first reference angle and the second angle (452) is less than the second reference angle, based on identifying that the second camera (342) is facing a user, cease execution of the application.

12. The electronic device (300) of claim 11, wherein the electronic device (300) comprises:
a cover display (332) including a fourth display area (364) corresponding to a second surface opposite to the first surface of the second housing part (302); and
a third camera (343) disposed on the second surface of the second housing part (302),
wherein the instructions, when executed by the at least one processor (310) individually and/or collectively, cause the electronic device to:
in response to identifying that the state of the electronic device (300) is changed from the second state to the third state, display the user interface including a preview image obtained via the third camera (343) based on identifying that the third camera (343) is facing the user.

13. The electronic (300) device of claim 1, wherein the electronic device (300) comprises:
a cover display (332) including a fourth display area (364) corresponding to a second surface opposite to the first surface of the second housing part (302); and
a third camera (343) disposed on the second surface of the second housing part (302),
wherein the instructions, when executed by the at least one processor (310) individually and/or collectively, cause the electronic device (300) to:
identify that the electronic device (300) is in a second state in which the first angle (451) is greater than a first reference angle and the second angle (452) is less than a second reference angle which is less than the first reference angle,
while the electronic device (300) is in the second state:
based on identifying that the first camera (341) is facing a user of the electronic device (300), display, within the first display area (361), the user interface including the preview image obtained via the first camera (341), and
based on identifying that the second camera (342) is facing a user of the electronic device (300), display, within the fourth display area (364), the user interface including a preview image obtained via the second camera (342).

14. A method performed by an electronic device (300), comprising:
wherein the electronic device (300) comprises a first housing part (301), a second housing part (302) rotatably coupled with the first housing part (301), a third housing part (303) rotatably coupled with the second housing part (302), a flexible display (331) including a first display area (361) corresponding to a first surface of the first housing part (301), a second display area (362) corresponding to a first surface of the second housing part (302), and a third display area (363) corresponding to a first surface of the third housing part (303), a first camera (341) disposed on the first surface of the first housing part (301), a second camera (342) disposed on a second surface opposite to the first surface of the first housing part (301), and one or more sensors (350),
while executing an application for obtaining an image related to an external environment, based on a state of the electronic device (300) according to a positional relationship between the first housing part (301), the second housing part (302), and the third housing part (303):
determining at least one of the first display area (361), the second display area (362), and the third display area (363) as a display area to display a user interface for the application, and
determining one of the first camera (341) and the second camera (342) as a camera to obtain a preview image to be displayed in the user interface,
determining, based on the determined display area and an orientation of the electronic device (300) identified via the one or more sensors (350), a layout of the user interface for the application, and
displaying, based on the determined layout, the user interface for the application, including the preview image obtained via the determined camera, in the determined display area.

15. A non-transitory computer readable storage medium storing one or more programs, wherein the one or more programs comprise instructions, when executed by at least one processor (310) of an electronic device (300) comprising a first housing part (301), a second housing part (302) rotatably coupled with the first housing part (301), a third housing part (303) rotatably coupled with the second housing part (302), a flexible display (331) including a first display area (361) corresponding to a first surface of the first housing part (301), a second display area (362) corresponding to a first surface of the second housing part (302), and a third display area (363) corresponding to a first surface of the third housing part (303), a first camera (341) disposed on the first surface of the first housing part (301), a second camera (342) disposed on a second surface opposite to the first surface of the first housing part (301), and one or more sensors (350), , cause the electronic device to:
while executing an application for obtaining an image related to an external environment based on a state of the electronic device (300) according to a position relationship of the first housing part (301), the second housing part (302), and the third housing part (303):
determine at least one of the first display area (361), the second display area (362), and the third display area (363) as a display area to display a user interface for the application, and
determine one of the first camera (341) and the second camera (342) as a camera to obtain a preview image to be displayed in the user interface,
determine, based on the determined display area and an orientation of the electronic device identified via the one or more sensors (350), a layout of the user interface for the application, and
display, based on the determined layout, the user interface for the application, including the preview image obtained via the determined camera, in the determined display area.
